# EUROPEAN PATENT APPLICATION

(11) **EP 4 803 906 A1**
(43) Date of publication of application: **09.09.2026**
(21) Application number: 26161731.0
(22) Date of filing: 02.03.2026
(51) Int. Cl.: G01N 35/00, G01N 35/04, G01N 35/02

(54) **AUTOMATIC ANALYZING APPARATUS AND METHOD OF CONTROLLING AUTOMATIC ANALYZING APPARATUS**

(30) Priority: 03.03.2025 JP 2025032946
(71) Applicant: Canon Medical Systems Corporation, Tochigi (JP)
(72) Inventor: YAMAMOTO, Tetsushi, Otawara-shi (JP); MURATA, Tatsuya, Otawara-shi (JP); KODAMA, Kiwamu, Otawara-shi (JP); SAITOU, Masaaki, Otawara-shi (JP); HASHIMOTO, Shozo, Otawara-shi (JP); TAKAYAMA, Hiroko, Otawara-shi (JP); KINPARA, Takeshi, Otawara-shi (JP)
(74) Representative: Marks & Clerk LLP

(57) **Abstract**

An automatic analyzing apparatus according to an embodiment includes an installation table, a transporter, an acquisition unit, and a control unit. The installation table is for installing a specimen rack that holds a specimen container for containing a specimen and a reagent container for containing a reagent used for measurement. The transporter holds and transports the specimen rack or the reagent container installed in the installation table. The acquisition unit acquires position information related to a position where the specimen rack or the reagent container installed in the installation table is held. The control unit controls the transporter to hold the specimen rack or the reagent container installed in the installation table based on the position information.

## Description

### CROSS REFERENCE TO RELATED APPLICATIONS

This application is based upon and claims the benefit of priority from the prior Japanese Patent Application No. 2025-032946, filed on March 3, 2025, the entire contents of which are incorporated herein by reference.

### FIELD

Embodiments described in the present specification and drawings relate to an automatic analyzing apparatus and a method of controlling the automatic analyzing apparatus.

### BACKGROUND

An automatic analyzing apparatus is an apparatus that optically measures, for example, a reaction liquid obtained by mixing a sample such as a test sample collected from a subject such as blood or a standard sample of each measurement item with a reagent corresponding to each measurement item to analyze a component of the test sample corresponding to each measurement item.

In the related art, there is an automatic analyzing apparatus including an installation table configured to install a specimen rack holding a specimen container for containing a specimen and a reagent container for containing a reagent used for measurement, and a transporter configured to hold the specimen rack or the reagent container installed in the installation table to transport the specimen rack or the reagent container to a predetermined position in the apparatus. The reagent container transported by such a transporter is a reagent container that contains a first reagent and a second reagent, and is a reagent manufacturer dedicated container corresponding to an automatic analyzing apparatus.

The automatic analyzing apparatus having the transporter as described above is advantageous for the user in terms of reducing the labor of the user for reagent replacement. On the other hand, while only the reagent manufacturer dedicated container can be installed, the present inventors have found that such an automatic analyzing apparatus is disadvantageous from the viewpoint of cost of a reagent and compatibility with various reagents. Then, the present inventors have considered that usability and reduction of reagent cost or improvement of reagent compatibility are compatible by transporting a general-purpose reagent container to a reagent storage by the transporter.

Then, the present inventors have considered that, in an automatic analyzing apparatus including a transporter that transports a specimen rack or a general-purpose reagent container as a reagent container, in order to enable a large number of specimen racks or reagent bottles to be installed at a time in an installation table and to make an apparatus size compact, each of a plurality of slots in the installation table may be configured to enable the specimen rack and the reagent container to be installed. However, the present inventors have found that when such a configuration is adopted, if the specimen rack and the reagent container are different in size, there is room for improvement in the following points when the transporter holds (picks up) the specimen rack or the reagent container installed in the installation table.

For example, if the shape of the specimen rack and the shape of the reagent container are made uniform so that the transporter can easily hold the specimen rack and the reagent container, the size of the reagent container increases, and thus, the size of an automatic loading mechanism for the reagent bottle and the size of the reagent storage also increase, and as a result, the size of the automatic analyzing apparatus increases. In addition, for example, if a specification is adopted in which the specimen rack and the reagent bottle in the installation table are installed so as to be aligned with the transporter side so that the transporter can easily hold the reagent container without changing the size of the reagent container, it is difficult for the user to remove the reagent container from the installation table in a case where the reagent container is installed between the specimen racks or the like.

### SUMMARY OF INVENTION

An automatic analyzing apparatus comprising:
an installation table configured to install a specimen rack and a reagent container, the specimen rack holding a specimen container for containing a specimen and the reagent container containing a reagent used for measurement;
a transporter configured to hold and transport the specimen rack or the reagent container installed in the installation table; and
processing circuitry configured to
acquire position information related to a position for holding the specimen rack or the reagent container installed in the installation table; and
control, based on the position information, the transporter to hold the specimen rack or the reagent container installed in the installation table.

The automatic analyzing apparatus may comprise a measurement sensor configured to measure a distance to the specimen rack or the reagent container installed in the installation table and/or
the processing circuitry may acquire a measurement result of the measurement sensor as the position information.

The automatic analyzing apparatus may comprise a detection sensor configured to detect the specimen rack or the reagent container installed in the installation table and/or
the processing circuitry may acquire a detection result of the detection sensor as the position information.

The automatic analyzing apparatus may comprise a reader configured to read first additional information attached to the specimen rack and second additional information attached to the reagent container, and read first additional information of the specimen rack or second additional information of the reagent container installed in the installation table.

The first additional information may be rack identification information for identifying the specimen rack, and the second additional information may be reagent container identification information for identifying the reagent container.

The processing circuitry may determine, based on a reading result of the reader, which one of the specimen rack and the reagent container is installed in the installation table,
the position information may include first position information and second position information, the first position information being related to a position where the specimen rack is held and the second position information being related to a position where the reagent container is held, and/or
the processing circuitry may acquire the first position information or the second position information based on a determination result of the reader and control the transporter based on the first position information or the second position information

An automatic analyzing apparatus comprising:
an installation table configured to install a specimen rack and a reagent container, the specimen rack holding a specimen container for containing a specimen and the reagent container containing a reagent used for measurement;
a transporter configured to hold and transport the specimen rack or the reagent container installed in the installation table;
a reader configured to read first additional information attached to the specimen rack and second additional information attached to the reagent container, and read first additional information of the specimen rack or second additional information of the reagent container installed in the installation table; and
processing circuitry configured to control the transporter to hold the specimen rack or the reagent container installed in the installation table at a position corresponding to a reading result of the reader.

The reader may be provided in the transporter.
the reader may include a reader body configured to read the first additional information and the second additional information and a reflector configured to configure an optical path between first additional information of the specimen rack or second additional information of the reagent container installed in the installation table and the reader body.

The transporter may include a holding arm provided with a first holder for holding the specimen rack and a second holder for holding the reagent container, and/or
the processing circuitry may switch, based on the first position information or the second position information, to a first use state in which the first holder is usable or a second use state in which the second holder is usable.

The transporter may include a holding arm provided with a first holder for holding the specimen rack and a second holder for holding the reagent container, and
the processing circuitry may switch to a first use state in which the first holder is usable or a second use state in which the second holder is usable based on the first additional information or the second additional information.

The processing circuitry may control a transport operation of the transporter using different parameters between a case where the transporter holds and transports the specimen rack and a case where the transporter holds and transports the reagent container.

The processing circuitry may control the transport operation of the transporter by using a parameter such that a transport speed of the transporter in a case where the transporter holds and transports the reagent container is lower than a transport speed of the transporter in a case where the transporter holds and transports the specimen rack.

The installation table may include a restrictor that restricts a position of the reagent container such that an end portion on a back side of the reagent container is positioned on a front side of an end portion on a back side of the specimen rack with respect to an insertion direction in installation, and
in a state where the reagent container and the specimen rack are installed in the installation table, a position in the insertion direction of a handle for the user to hold the reagent container and a position in the insertion direction of a handle for the user to hold the specimen rack substantially coincide with each other.

A method of controlling an automatic analyzing apparatus,
the automatic analyzing apparatus including;
an installation table configured to install a specimen rack and a reagent container, the specimen rack holding a specimen container for containing a specimen and the reagent container containing a reagent used for measurement; and
a transporter configured to hold and transport the specimen rack or the reagent container installed in the installation table,
the method comprising:
   acquiring position information related to a position for holding the specimen rack or the reagent container installed in the installation table; and
   controlling, based on the position information, the transporter to hold the specimen rack or the reagent container installed in the installation table.

The automatic analyzing apparatus may include a reader configured to read rack identification information for identifying the specimen rack and reagent container identification information for identifying the reagent container, the rack identification information being attached to the specimen rack and the reagent container identification information being attached to the reagent container,
the method may comprise reading the rack identification information of the specimen rack or the reagent container identification information of the reagent container, installed in the installation table.

### BRIEF DESCRIPTION OF THE DRAWINGS

FIG. 1 is a block diagram illustrating an example of a functional configuration of an automatic analyzing apparatus according to a first embodiment.
FIG. 2 is a schematic diagram illustrating a configuration of the analysis mechanism according to the first embodiment.
FIG. 3 is a diagram illustrating an example of an installation state of a sample rack and a reagent container when viewed from a user side in the first embodiment.
FIG. 4 is a diagram illustrating an example of the installation state of the sample rack and the reagent container when viewed from the transporter side in the installation state illustrated in FIG. 3.
FIG. 5 is a diagram illustrating an example of a configuration of a transporter according to the first embodiment.
FIG. 6A is a diagram of a positional relationship between a reader, a holding arm in the transporter, and the sample rack as viewed from above.
FIG. 6B is a diagram of a positional relationship between the reader, the holding arm in the transporter, and the sample rack as viewed from the side.
FIG. 7 is a flowchart for explaining a content of transport control processing executed by the automatic analyzing apparatus according to the first embodiment.
FIG. 8 is a diagram illustrating an example of a state in which the transporter according to the first embodiment holds the sample rack.
FIG. 9 is a schematic diagram illustrating a configuration of an analysis mechanism according to a first modification.
FIG. 10 is a flowchart for explaining a content of transport control processing executed by an automatic analyzing apparatus according to the first modification.
FIG. 11 is a block diagram illustrating an example of a functional configuration of an automatic analyzing apparatus according to a second embodiment.
FIG. 12 is a schematic diagram illustrating a configuration of the analysis mechanism according to the second embodiment.
FIG. 13 is a diagram illustrating an example of a configuration of a sample rack installed in an installation table of an automatic analyzing apparatus according to the second embodiment.
FIG. 14 is a diagram illustrating an example of an installation state of a sample rack and a reagent container when viewed from a user side in the second embodiment.
FIG. 15 is a diagram illustrating an example of the installation state of the sample rack and the reagent container when viewed from the transporter side in the installation state illustrated in FIG. 14.
FIG. 16 is a flowchart for explaining a content of transport control processing executed by the automatic analyzing apparatus according to the second embodiment.
FIG. 17 is a diagram illustrating an example of a configuration of a holding arm in a transporter according to a third embodiment.
FIG. 18 is a diagram illustrating an example of a configuration of a transporter according to the third embodiment.
FIG. 19 is a diagram illustrating an example of a configuration of a transporter according to the third embodiment.
FIG. 20 is a flowchart for explaining a content of transport control processing executed by the automatic analyzing apparatus according to the third embodiment.

### DETAILED DESCRIPTION

Hereinafter, respective embodiments of the an automatic analyzing apparatus and the method of controlling the automatic analyzing apparatus will be described with reference to the accompanying drawings. In the embodiments below, the same reference signs are given for identical components in terms of configuration and function, and duplicate description is omitted.

### [First Embodiment]

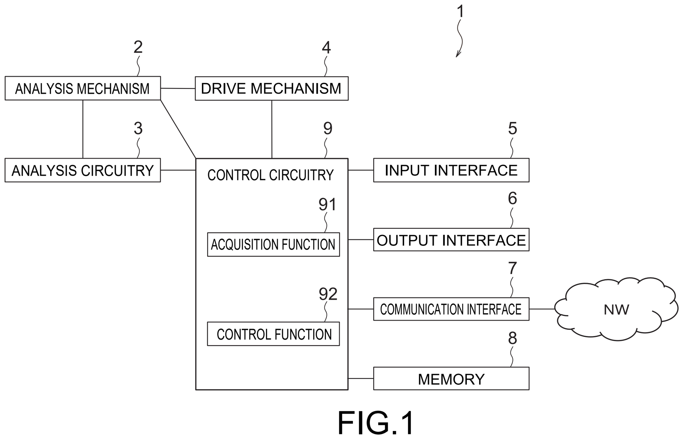

FIG. 1 is a block diagram illustrating an example of a functional configuration of an automatic analyzing apparatus according to a first embodiment. As illustrated in FIG. 1, an automatic analyzing apparatus 1 according to the present embodiment includes, for example, an analysis mechanism 2, analysis circuitry 3, a drive mechanism 4, an input interface 5, an output interface 6, a communication interface 7, a memory 8, and control circuitry 9.

The analysis mechanism 2 adds a reagent corresponding to a measurement item of a sample such as a standard sample or a test sample to the sample. The analysis mechanism 2 measures a mixed solution obtained by adding a reagent to a sample to generate, for example, standard data and test data. In the present embodiment, the standard data represents a measurement result such as absorbance for a standard sample whose concentration of a detection target is known. The test data represents a measurement result of absorbance or the like of the test sample. Note that, in the following description, in a case where the standard sample and the test sample are expressed without distinction, these samples may be simply referred to as a "sample". The sample is an example of a specimen in the present embodiment.

The analysis circuitry 3 is a processor that analyzes the standard data and the test data generated by the analysis mechanism 2 and generates calibration data, analysis data, and the like. The analysis circuitry 3 reads the analysis program from the memory 8, and generates calibration data, analysis data, and the like according to the read analysis program. For example, the analysis circuitry 3 generates standard data and calibration data indicating a relationship with a standard value set in advance for a standard sample based on the standard data. In addition, the analysis circuitry 3 generates analysis data represented as a concentration value and an enzyme activity value based on the test data and the calibration data of the test item corresponding to the test data. The analysis circuitry 3 outputs the generated calibration data, analysis data, and the like to the control circuitry 9.

The drive mechanism 4 drives the analysis mechanism 2 under the control of the control circuitry 9. The drive mechanism 4 is implemented by, for example, a gear, a stepping motor, a belt transporter, a lead screw, and the like.

The input interface 5 receives, for example, setting of an analysis parameter or the like of each measurement item related to the sample requested to be measured. The input interface 5 is implemented by, for example, a mouse, a keyboard, a touch pad to which an instruction is input by touching the operation surface, and the like. The input interface 5 is connected to the control circuitry 9, converts an operation instruction input from the user into an electric signal, and outputs the electric signal to the control circuitry 9. Note that, in the present embodiment, the input interface 5 is not limited to the interface including physical operation components such as a mouse, a keyboard, and the like. For example, also electric signal processing circuitry that receives an electric signal corresponding to an operation instruction input from an external input device provided separately from the automatic analyzing apparatus 1 and outputs the electric signal to the control circuitry 9 is included in examples of the input interface 5.

The output interface 6 is connected to the control circuitry 9 and outputs the signal supplied from the control circuitry 9. The output interface 6 is realized by, for example, display circuitry, print circuitry, an audio device, and the like. Examples of the display circuitry include a CRT (cathode ray tube) display, a liquid crystal display, an organic EL (electro luminescence) display, an LED display, and a plasma display. The display circuitry corresponds to a display unit according to the present embodiment. Note that the display circuitry also includes processing circuitry that converts data representing a display target into a video signal and outputs the video signal to the outside. The print circuitry includes, for example, a printer. Note that an output circuitry that outputs data representing a printing target to the outside is also included in the print circuitry. The audio device includes, for example, a speaker. Note that an output circuitry that outputs an audio signal to the outside is also included in the audio device.

The communication interface 7 is connected to, for example, the in-hospital network NW, and connects the automatic analyzing apparatus 1 to the in-hospital network NW. The communication interface 7 performs data communication with a hospital information system (HIS) via the in-hospital network NW. Note that the communication interface 7 may perform data communication with the HIS via a laboratory information system (LIS) connected to the in-hospital network NW.

The memory 8 includes a magnetic or optical recording medium, a recording medium readable by a processor such as a semiconductor memory, or the like. The memory 8 stores an analysis program executed by the analysis circuitry 3 and a control program executed by the control circuitry 9. In addition, the memory 8 stores the analysis data generated by the analysis circuitry 3 for each measurement item. Note that the memory 8 need not necessarily be implemented by a single storage device. For example, the memory 8 can be implemented by a plurality of storage devices.

The control circuitry 9 is a processor that functions as a center of the automatic analyzing apparatus 1. The control circuitry 9 is an example of the processing circuitry. The control circuitry 9 realizes a function corresponding to the operation program by executing the operation program stored in the memory 8. Note that the control circuitry 9 may include a storage area that stores at least part of the data stored in the memory 8.

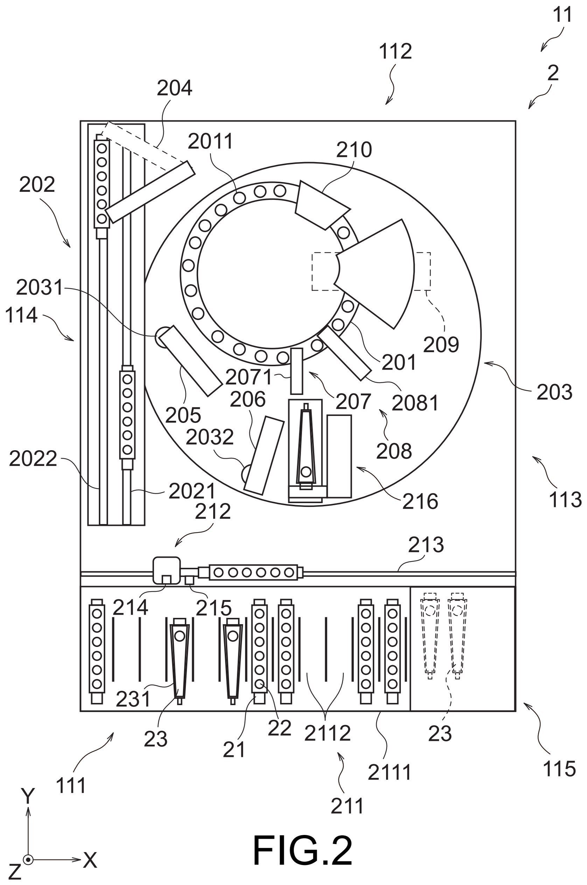

FIG. 2 is a schematic diagram illustrating a configuration of an analysis mechanism 2 according to the first embodiment. In FIG. 2, a first side surface 111, a second side surface 112, a third side surface 113, and a fourth side surface 114 define an outer boundary of the analysis mechanism 2. The first side surface 111 and the second side surface 112 face each other, and the third side surface 113 and the fourth side surface 114 face each other. The first side surface 111 can be referred to as a surface assumed to face a user who uses the automatic analyzing apparatus 1, that is, a "front surface" of the analysis mechanism 2. The second side surface 112, the third side surface 113, and the fourth side surface 114 can be referred to as a "back surface", a "right side surface", and a "left side surface", respectively. The first side surface 111 side can be referred to as "near side", and the second side surface 112 side can be referred to as "far side". In the following description, a direction from the fourth side surface 114 side toward the third side surface 113 side is referred to as an X direction, a direction from the first side surface 111 side toward the second side surface 112 side is referred to as a Y direction, and a vertically upward direction is referred to as a Z direction.

As illustrated in FIG. 2, the analysis mechanism 2 according to the present embodiment includes, for example, a reaction disk 201, a rack sampler 202, a reagent storage 203, a sample dispensing arm 204, a first reagent dispensing arm 205, a second reagent dispensing arm 206, a first stirring unit 207, a second stirring unit 208, a photometric unit 209, a cleaning unit 210, an installation table 211, a transporter 212, a transporter track 213, a reader 214, a measurement sensor 215, and a reagent container transporter 216.

The reaction disk 201 supports a plurality of reaction containers 2011 arranged in an annular shape at predetermined intervals. The reaction disk 201 transports the plurality of reaction containers 2011 along a predetermined path. Specifically, during the analysis operation of the reaction liquid of the sample and the reagent, the reaction disk 201 is alternately rotated and stopped at predetermined time intervals by the drive mechanism 4. The reaction disk 201 is disposed above the reagent storage 203 in a spaced apart manner. At least a part of the installation range of the reaction disk 201 overlaps the installation range of the reagent storage 203. The reaction disk 201 and the reagent storage 203 may be arranged adjacent to each other, for example, on the same plane. The reaction container 2011 is formed of, for example, glass, polypropylene (PP), or acrylic.

The rack sampler 202 movably supports the sample rack 21 that holds a sample container 22 for holding a sample, and a sample requested to be measured is contained in the plurality of sample containers 22. In the example illustrated in FIG. 2, the sample rack 21 capable of holding five sample containers 22 in parallel is illustrated. First additional information is attached to the sample rack 21. The first additional information is, for example, rack identification information. Hereinafter, an embodiment will be described below with an example in which the first additional information is rack identification information. The rack identification information is information for identifying the sample rack 21. The rack identification information can be configured by, for example, a barcode. The rack identification information is configured by a barcode, but is not limited thereto. That is, the configuration of the rack identification information is optional, and may be, for example, an optional pixel code such as a one-dimensional pixel code and a two-dimensional pixel code, an IC tag using radio frequency identification (RFID), or the like. The sample container 22 is an example of a specimen container in the present embodiment. The sample rack 21 is an example of a specimen rack in the present embodiment.

As illustrated in FIG. 2, the rack sampler 202 includes a first track portion 2021 and a second track portion 2022 extending from the first side surface 111 side to the second side surface 112 side, that is, in the Y direction. The first track portion 2021 and the second track portion 2022 include, for example, a belt, a chain, and the like. The first track portion 2021 and the second track portion 2022 are independently driven.

Each of the first track portion 2021 and the second track portion 2022 causes the drive mechanism 4 to move the sample rack 21 from a loading position where the sample rack 21 is loaded to a sampling position for sucking the sample contained in the sample container 22 held by the sample rack 21. In addition, each of the first track portion 2021 and the second track portion 2022 causes the drive mechanism 4 to move the sample rack 21, which has been sampled, from the sampling position to a collecting position where the sample rack 21 is collected. In the example illustrated in FIG. 2, the loading position and the collecting position are the same position.

Here, the loading position and the collecting position are provided at positions where a rotation trajectory of a holding arm of the transporter 212 and a movement trajectory of the sample rack 21 moved by each of the first track portion 2021 and the second track portion intersect. In addition, the sampling position is provided, for example, at a position where the rotation trajectory of a sample dispensing probe of the sample dispensing arm 204 and the movement trajectory of an opening of the sample container 22 held by the sample rack 21 moved by each of the first track portion 2021 and the second track portion 2022 intersect.

The reagent storage 203 refrigerates a plurality of reagent containers containing reagents used for measurement. Specifically, the reagent storage 203 refrigerates a plurality of reagent containers 23 such as a reagent container 23 containing a first reagent that reacts with a predetermined component included in a standard sample or a predetermined component included in a test sample and a reagent container 23 containing a second reagent paired with a first reagent of two reagent systems. The first reagent may be, for example, a buffer solution containing bovine serum albumin (BSA) or the like. The second reagent may be a solution containing a predetermined antigen or antibody contained in the sample and an insoluble carrier, for example, a carrier particle on which an antigen or antibody bound or separated by a specific antigen-antibody reaction is immobilized. An enzyme, a substrate, an aptamer, or a receptor may be bound or separated by a specific reaction. In the reagent storage 203, a reagent rack is rotatably provided. The reagent rack holds a plurality of the reagent containers 23 arranged in an annular shape. The reagent rack is rotated by the drive mechanism 4.

Second additional information is attached to the reagent container 23. The second additional information is, for example, reagent container identification information. Hereinafter, an embodiment will be described below with an example in which the second additional information is reagent container identification information. The reagent container identification information is information for identifying the reagent container 23. The reagent container identification information can be configured by, for example, a barcode. The reagent container identification information is configured by a barcode, but is not limited thereto. That is, the reagent container identification information may have any configuration. For example, the reagent container identification information may have any pixel code such as a one-dimensional pixel code and a two-dimensional pixel code.

The sample dispensing arm 204 is provided between the reaction disk 201 and the rack sampler 202. The sample dispensing arm 204 is provided to be movable up and down in the vertical direction and to be rotatable in the horizontal direction by the drive mechanism 4. The sample dispensing arm 204 holds the sample dispensing probe at one end.

The sample dispensing probe rotates along an arc-shaped rotation trajectory as the sample dispensing arm 204 rotates. The sampling position for sucking a sample from the sample container 22 held by the rack sampler 202 is provided on the rotation trajectory. Furthermore, a sample discharge position for discharging the sample sucked by the sample dispensing probe to the reaction container 2011 held in the reaction disk 201 is provided on the rotation trajectory of the sample dispensing probe. The sample discharge position is provided at a position where the rotation trajectory of the sample dispensing probe and the movement trajectory of the reaction container 2011 held by the reaction disk 201 intersect.

The sample dispensing probe is driven by the drive mechanism 4 and moves in the vertical direction at the sampling position or the sample discharge position. In addition, the sample dispensing probe sucks a sample from the sample container 22 held by the sample rack 21 at the sampling position according to the control of the control circuitry 9. In accordance with the control of the control circuitry 9, the sample dispensing probe discharges the sucked sample to the reaction container 2011 located immediately below the sample discharge position.

The first reagent dispensing arm 205 is provided in the vicinity of a reagent rack of the reagent storage 203. The first reagent dispensing arm 205 is provided to be movable up and down in the vertical direction (Z direction) and to be rotatable in the horizontal direction (XY in-plane direction) by the drive mechanism 4. The first reagent dispensing arm 205 holds a first reagent dispensing probe at one end.

The first reagent dispensing probe rotates along an arc-shaped rotation trajectory as the first reagent dispensing arm 205 rotates. A first reagent suction position is provided on this rotation trajectory. The first reagent suction position is provided, for example, at a position where the rotation trajectory of the first reagent dispensing probe and the movement trajectory of the opening of the reagent container 23 containing the first reagent arranged in an annular shape in the reagent rack of the reagent storage 203 intersect. As illustrated in FIG. 2, a first insertion hole 2031 is provided in the upper surface of the reagent storage 203 corresponding to the first reagent suction position.

Furthermore, a first reagent discharge position for discharging the reagent sucked by the first reagent dispensing probe to the reaction container 2011 is set on the rotation trajectory of the first reagent dispensing probe. The first reagent discharge position is provided at a position where the rotation trajectory of the first reagent dispensing probe and the movement trajectory of the reaction container 2011 held by the reaction disk 201 intersect.

The first reagent dispensing probe is driven by the drive mechanism 4 and moves in the vertical direction at the first reagent suction position or the first reagent discharge position on the rotation trajectory. Under the control of the control circuitry 9, the first reagent dispensing probe sucks the reagent from the reagent container 23 which is held in the reagent rack and located immediately below the first reagent suction position via the first insertion hole 2031. In accordance with the control of the control circuitry 9, the first reagent dispensing probe discharges the sucked reagent to the reaction container 2011 located immediately below the first reagent discharge position. The reagent sucked by the first reagent dispensing probe according to the present embodiment is, for example, a first reagent. Note that the first reagent dispensing probe according to the present embodiment sucks the first reagent, but the target to be sucked by the first reagent dispensing probe is not limited thereto. That is, the target to be sucked by the first reagent dispensing probe is optional, and when the reagent container 23 containing the second reagent or the standard sample container containing the standard sample is installed in the reagent rack, the second reagent or the standard sample may be sucked and discharged to the reaction container 2011.

The second reagent dispensing arm 206 is provided in the vicinity of a reagent rack of the reagent storage 203. The second reagent dispensing arm 206 is provided to be movable up and down in the vertical direction and to be rotatable in the horizontal direction by the drive mechanism 4. The second reagent dispensing arm 206 holds a second reagent dispensing probe at one end.

The second reagent dispensing probe rotates along an arc-shaped rotation trajectory as the second reagent dispensing arm 206 rotates. The second reagent suction position is provided on this rotation trajectory. The second reagent suction position is provided, for example, at a position where the rotation trajectory of the second reagent dispensing probe and the movement trajectory of the opening of the reagent container 23 containing the second reagent arranged in an annular shape in the reagent rack intersect. As illustrated in FIG. 2, a second insertion hole 2032 is provided in the upper surface of the reagent storage 203 corresponding to the second reagent suction position.

Furthermore, a second reagent discharge position for discharging the second reagent sucked by the second reagent dispensing probe to the reaction container 2011 is set on the rotation trajectory of the second reagent dispensing probe. The second reagent discharge position is provided at a position where the rotation trajectory of the second reagent dispensing probe and the movement trajectory of the reaction container 2011 held by the reaction disk 201 intersect.

The second reagent dispensing probe is driven by the drive mechanism 4 and moves in the vertical direction at the second reagent suction position or the second reagent discharge position on the rotation trajectory. Under the control of the control circuitry 9, the second reagent dispensing probe sucks the reagent from the reagent container 23 which is held in the reagent rack and located immediately below the second reagent suction position via the second insertion hole 2032. In accordance with the control of the control circuitry 9, the second reagent dispensing probe discharges the sucked reagent to the reaction container 2011 located immediately below the second reagent discharge position. The reagent sucked by the second reagent dispensing probe according to the present embodiment is, for example, a second reagent. Note that the second reagent dispensing probe according to the present embodiment sucks the second reagent, but the target to be sucked by the second reagent dispensing probe is not limited thereto. That is, the target to be sucked by the second reagent dispensing probe is optional, and when the reagent container 23 containing the first reagent or the standard sample container containing the standard sample is installed in the reagent rack, the first reagent or the standard sample may be sucked and discharged to the reaction container 2011.

The first stirring unit 207 is provided in the vicinity of the outer periphery of the reaction disk 201. The first stirring unit 207 includes a first stirring arm 2071 and a first stirrer provided at a distal end of the first stirring arm 2071. The first stirring unit 207 stirs a reaction liquid of the standard sample and the first reagent contained in the reaction container 2011 located at the first stirring position on the reaction disk 201 with the first stirrer. The first stirring unit 207 stirs a reaction liquid of the test sample and the first reagent contained in the reaction container 2011 located at the first stirring position on the reaction disk 201 with the first stirrer.

The second stirring unit 208 is provided in the vicinity of the outer periphery of the reaction disk 201. The second stirring unit 208 includes a second stirring arm 2081 and a second stirrer provided at a distal end of the second stirring arm 2081. The second stirring unit 208 stirs a reaction liquid of the standard sample, the first reagent, and the second reagent contained in the reaction container 2011 located at the second stirring position on the reaction disk 201 with the second stirrer. Further, the second stirring unit 208 stirs a reaction liquid of the test sample, the first reagent, and the second reagent contained in the reaction container 2011 located at the second stirring position with the second stirrer.

The photometric unit 209 optically measures a reaction liquid of the sample, the first reagent, and the second reagent discharged into the reaction container 2011. The photometric unit 209 includes a light source and a photodetector. The photometric unit 209 emits light from the light source under the control of the control circuitry 9. The emitted light is incident from the first side wall of the reaction container 2011 and emitted from the second side wall facing the first side wall. The photometric unit 209 detects the light emitted from the reaction container 2011 with the photodetector.

Specifically, for example, the photodetector is disposed at a position on the optical axis of the light emitted from the light source to the reaction container 2011 when the transmitted light is used, and is disposed at a position shifted from the optical axis when the scattered light is used. The photodetector detects light that has passed through the reaction liquid of the standard sample, the first reagent, and the second reagent in the reaction container 2011. The automatic analyzing apparatus 1 acquires photometric data represented by the intensity of light detected by the photodetector. Then, the automatic analyzing apparatus 1 generates standard data represented by absorbance or the like based on the measurement data acquired from the photometric data at a predetermined timing. The photodetector detects light that has passed through the reaction liquid of the test sample, the first reagent, and the second reagent in the reaction container 2011. The automatic analyzing apparatus 1 acquires photometric data represented by the intensity of light detected by the photodetector. Then, the automatic analyzing apparatus 1 generates test data represented by absorbance or the like based on the measurement data acquired from the photometric data at a predetermined timing. The photometric unit 209 outputs the generated standard data and test data to the analysis circuitry 3.

The cleaning unit 210 cleans the inside of the reaction container 2011 in which the measurement of the reaction liquid has been completed by the photometric unit 209.

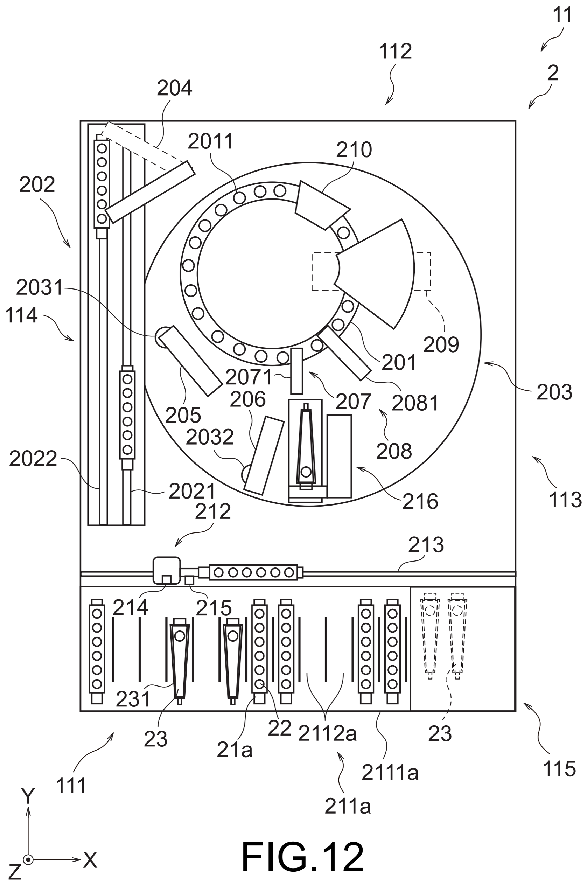

The installation table 211 is for installing the sample rack 21 holding the sample container 22 and the reagent container 23. For example, the installation table 211 supports the sample rack 21 that holds the sample container 22 loaded by the user. In addition, the installation table 211 supports the reagent container 23 loaded by the user. As illustrated in FIG. 2, an adapter 231 is attached to the reagent container 23 installed in the installation table 211. Since the adapter 231 includes a transporter handle 231_2, even when the reagent container 23 is a general-purpose reagent container, the transporter 212 of an analyzing apparatus 2 can hold and transport the reagent container 23 via the transporter handle 231_2. In addition, the installation table 211 supports the sample rack 21 on which the measurement is completed and the reagent container 23 taken out from the reagent storage 203. As illustrated in FIG. 2, the installation table 211 includes a tray 2111 for installing the sample rack 21 and the reagent container 23. The tray 2111 has a plurality of slots 2112 for receiving the sample rack 21 and the reagent container 23. In the example illustrated in FIG. 2, the sample rack 21 and the reagent container 23 are installed in any one of the plurality of slots 2112. In the example illustrated in FIG. 2, 12 slots are provided in the installation table 211, but the number of slots provided in the installation table 211 is not limited to 12. That is, the number of slots provided in the installation table 211 is optional, and may be 11 or less, or may be 13 or more. In addition, the number of slots provided in the installation table 211 may be plural or may be one.

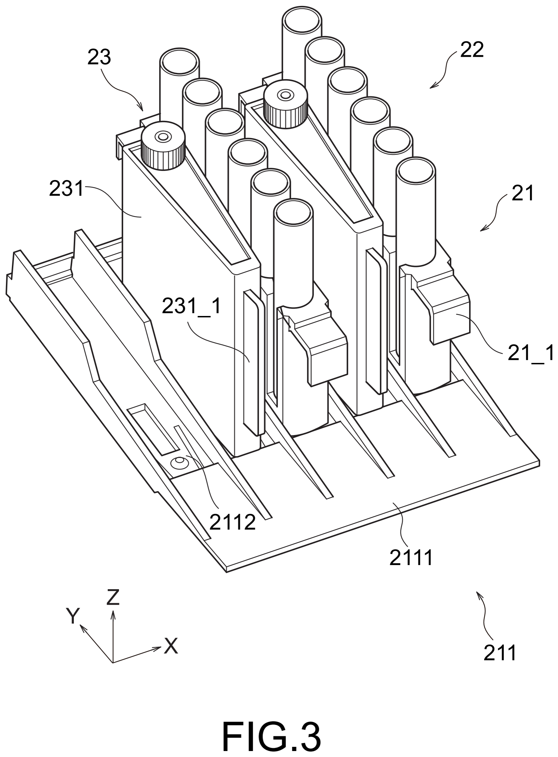

FIG. 3 is a diagram illustrating an example of an installation state of the sample rack and the reagent container when viewed from the front side (first side surface 111 side) of the analysis mechanism 2, that is, from the user side in the first embodiment. As illustrated in FIG. 3, when viewed from the user side, the sample rack 21 and the reagent container 23 are installed so as to be aligned with the user side (front side) of the tray 2111 of the installation table 211. As described above, the sample rack 21 and the reagent container 23 are installed so as to be aligned on the user side, whereby the user can easily hold the user handle 21_1 provided in the sample rack 21 and the user handle 231_1 provided in the adapter 231, and it is easy to install the sample rack 21 and the reagent container 23 in the installation table 211 and to take out the sample rack 21 and the reagent container 23 from the installation table.

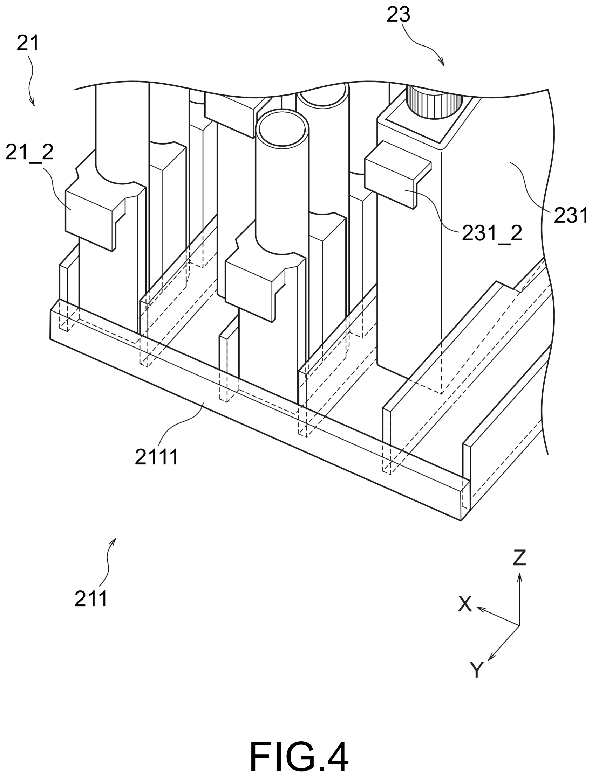

FIG. 4 is a diagram illustrating an example of the installation state of the sample rack 21 and the reagent container 23 when viewed from the transporter 212 side in the installation state illustrated in FIG. 3. As illustrated in FIG. 4, since the size of the sample rack 21 and the size of the reagent container 23, particularly, the dimension in the depth direction of the sample rack 21 and the dimension in the depth direction of the reagent container 23 are different, the sample rack and the reagent container are not installed so as to be aligned with the transporter 212 side (back side) of the tray 2111 of the installation table 211. Therefore, the position of the transporter handle 21_2 of the sample rack 21 and the position of the transporter handle 231_2 of the adapter 231 are different from each other with respect to the transporter 212.

The transporter 212 is a mechanism that holds and transports the sample rack 21 or the reagent container 23 installed in the installation table 211. Specifically, the transporter 212 transports the sample rack 21 installed in the installation table 211 to the loading position. In addition, the transporter 212 transports the reagent container 23 installed in the installation table 211 to a storage position in a reagent container temporary storage 115 illustrated in FIG. 2. In addition, the transporter 212 transports the sample rack 21, which has been sampled and moved to the collecting position of the rack sampler 202, to the installation table 211. Further, the transporter 212 transports the reagent container 23 taken out from the reagent storage 203 by the reagent container transporter 216 and transported to the reagent container temporary storage 115 to the installation table 211.

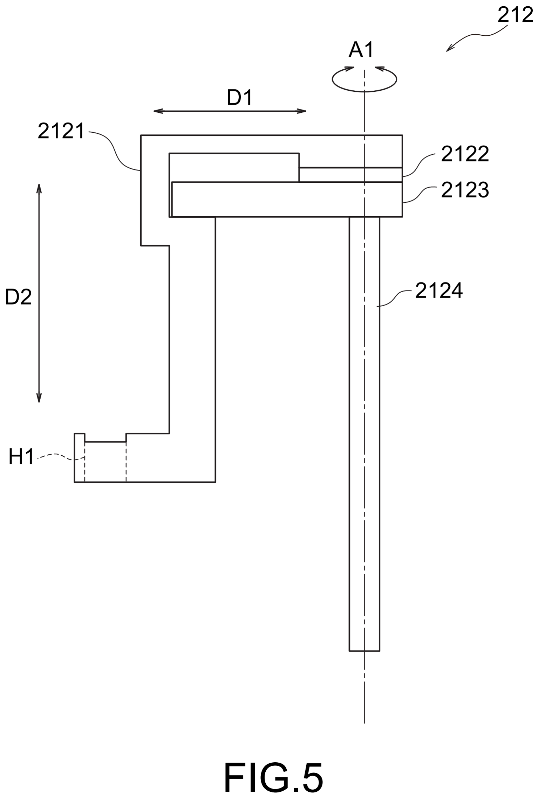

FIG. 5 is a diagram illustrating an example of a configuration of the transporter 212 according to the first embodiment. As illustrated in FIG. 5, the transporter 212 includes a holding arm 2121, a moving member 2122, a base 2123, and a shaft 2124.

The holding arm 2121 holds the sample rack 21 or the reagent container 23 installed in the installation table 211. In the example illustrated in FIG. 5, an engagement hole H1 is formed in the vicinity of the distal end of the holding arm 2121, and the transporter handle 21_2 of the sample rack 21 or the transporter handle 231_2 of the adapter 231 is engaged with the engagement hole H1, whereby the holding arm 2121 holds the sample rack 21 or the reagent container 23. As illustrated in FIG. 5, one end of the holding arm 2121 is connected to the moving member 2122, and the moving member 2122 moves the holding arm 2121 with respect to the base 2123 by the drive mechanism 4, thereby moving in a direction D1. In addition, the holding arm 2121 moves in a D2 direction as the shaft 2124 moves in the vertical direction by the drive mechanism 4. Further, the holding arm 2121 rotates when the shaft 2124 rotates about an axis A1 by the drive mechanism 4.

The moving member 2122 is a member for moving the holding arm 2121 in the D1 direction with respect to the base 2123 by the drive mechanism 4. The moving member 2122 includes, for example, a ball screw, a linear guide, a rack-and-pinion drive, a belt drive, and the like.

The moving member 2122 is attached to the base 2123 and is attached to the shaft 2124. The shaft 2124 is rotated about the axis A1 by the drive mechanism 4.

Returning to FIG. 2, the transporter track 213 moves the transporter 212 in the direction (X direction) parallel to the first side surface 111 and the second side surface 112.

The reader 214 reads first additional information and second additional information. Specifically, the reader 214 reads the rack identification information and the reagent container identification information. More specifically, the reader 214 reads the rack identification information of the sample rack 21 or the reagent container identification information of the reagent container 23 installed in the installation table 211. The reading result of the reader 214 is output to the control circuitry 9. In the present embodiment, the reader 214 is provided in the transporter 212, and moves as the transporter 212 moves along the transporter track 213.

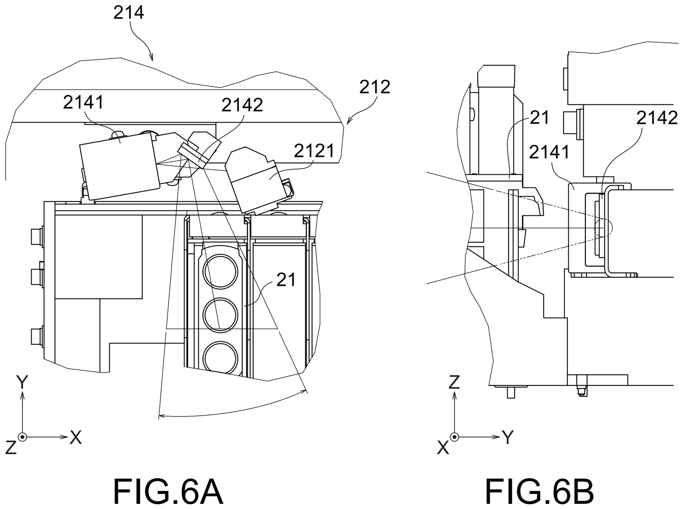

FIG. 6 is a diagram illustrating a configuration of the reader 214 and a positional relationship among the reader 214, the holding arm 2121, and the sample rack 21. FIG. 6A is a diagram of the positional relationship among the reader 214, the holding arm 2121 in the transporter 212, and the sample rack 21 as viewed from above, and FIG. 6B is a diagram of the positional relationship among the reader 214, the holding arm 2121 in the transporter 212, and the sample rack 21 as viewed from the -X direction from the right side surface side (third side surface 113 side) of the analysis mechanism 2. As illustrated in FIG. 6A, the reader 214 includes a reader body 2141 and a reflector 2142.

The reader body 2141 is a device that reads rack identification information and reagent container identification information. In the present embodiment, the reader body 2141 includes a barcode reader body for reading a barcode constituting the rack identification information and the reagent container identification information. Note that the reader body 2141 is not limited to a case of being configured by a barcode reader body. That is, the configuration of the reader body 2141 is optional, and the reader body 2141 may be configured by a reader body that reads a pixel code, a reader body that reads an IC tag, or the like according to the configuration of the rack identification information and the reagent container identification information.

The reflector 2142 is a member that constitutes an optical path between the rack identification information of the sample rack 21 or the reagent container identification information of the reagent container 23 installed in the installation table 211 and the reader body 2141. The reflector 2142 is, for example, a mirror.

As illustrated in FIGS. 6A and 6B, in a case where the reader body 2141 is a barcode reader body, the reflector 2142 reflects the emitted light beam emitted from the reader body 2141, hits the rack identification information of the sample rack 21, and causes the reflected light beam to be incident on the reader body 2141, and thereby the reader body 2141 reads the rack identification information of the sample rack 21. Therefore, as illustrated in FIGS. 6A and 6B, the reflector 2142 reflects the emitted light from the reader body 2141 such that the barcode constituting the rack identification information of the sample rack 21 is included in the reading range of the reader body 2141.

As illustrated in FIG. 6A, in the present embodiment, when the reader 214 reads the rack identification information of the sample rack 21 or the reagent container identification information of the reagent container 23 installed in the installation table 211, the holding arm 2121 in the transporter 212 is retracted to the retracted position that is a position not interfering with the irradiation range of the emitted light from the reader body 2141. Then, when the reader 214 completes reading the rack identification information or the reagent container identification information, the holding arm 2121 in the transporter 212 moves to a standby position that is a position facing the sample rack 21 or the reagent container 23 installed in the installation table 211. For example, in the present embodiment, the holding arm 2121 moves between the retracted position and the standby position as the shaft 2124 rotates.

Note that the reader 214 includes the reflector 2142, but the reflector 2142 may not necessarily be included. In this case, when the transporter 212 moves to the position of the sample rack 21 or the reagent container 23 installed in the installation table, the reader body 2141 may be provided at a position where the rack identification information of the sample rack 21 or the reagent container identification information of the reagent container 23 is included in the reading range of the reader body 2141. Furthermore, although the reader 214 is provided in the transporter 212, the reader 214 may be provided independently of the transporter 212. In this case, the reader 214 may be attached to a moving mechanism for moving the reader 214 and may be moved by a moving mechanism.

The measurement sensor 215 measures a distance to the sample rack 21 or the reagent container 23 installed in the installation table 211. The measurement sensor 215 is, for example, a laser distance sensor. The measurement sensor 215 outputs a measurement result to the control circuitry 9. As illustrated in FIG. 2, the measurement sensor 215 is provided in the transporter 212, for example. Note that the measurement sensor 215 is not limited to the laser distance sensor. That is, the configuration of the measurement sensor 215 is optional, and the measurement sensor 215 may be, for example, an optical camera, an ultrasonic sensor, or the like.

The reagent container transporter 216 has an arm (not illustrated) for taking in and out the reagent container 23 from an opening provided in the reagent storage 203. As illustrated in FIG. 2, an arm of the reagent container transporter 216 is engaged with the reagent container 23. The reagent container 23 is stored in the reagent storage 203 by the operation of the reagent container transporter 216. Alternatively, the reagent container 23 is taken out of the reagent storage 203 by the operation of the reagent container transporter 216. In addition, the reagent container transporter 216 according to the present embodiment holds the reagent container 23 transported to the reagent container temporary storage 115 and transports the reagent container to the reagent storage 203.

Returning to FIG. 1, the control circuitry 9 realizes an acquisition function 91, a control function 92 by executing a control program, for example. In the present embodiment, a case where the acquisition function 91 and the control function 92 are realized by a single processor will be described, but the present invention is not limited thereto. For example, the control circuitry may be configured by combining a plurality of independent processors, and each processor may execute a control program to implement the acquisition function 91 and the control function 92.

The acquisition function 91 is a function of acquiring position information related to a position where the sample rack 21 or the reagent container 23 installed in the installation table 211 is held. The acquisition function 91 corresponds to an acquisition unit in the present embodiment.

The control function 92 is a function of integrally controlling each unit in the automatic analyzing apparatus 1 based on input information input from the input interface 5. For example, the control function 92 controls the drive mechanism 4 and the analysis mechanism 2 in the control circuitry 9, and controls the analysis circuitry 3 so as to perform analysis according to the measurement item. In addition, the control function 92 controls the transporter 212 to hold the sample rack 21 or the reagent container 23 installed in the installation table 211 based on the position information. Note that the control function 92 corresponds to a control unit in the present embodiment.

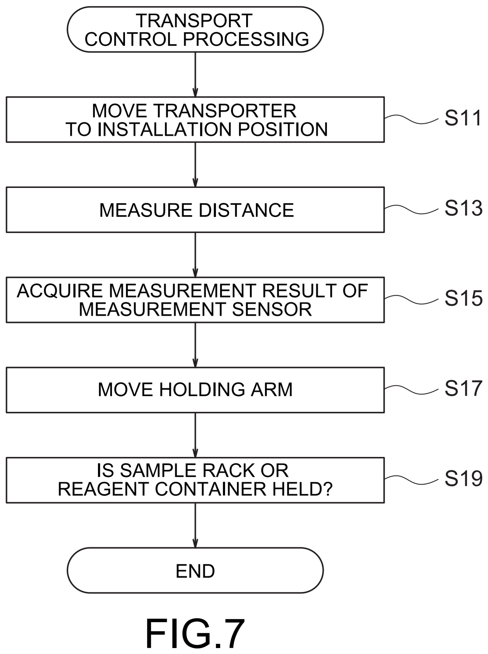

FIG. 7 is a flowchart for explaining a content of transport control processing executed by the automatic analyzing apparatus 1 according to the first embodiment. In this transport control processing, the automatic analyzing apparatus 1 moves the transporter 212 to the installation position, measures the distance, acquires the measurement result, moves the holding arm, and holds the sample rack 21 or the reagent container. This transport control processing is processing executed when the sample rack 21 or the reagent container 23 is installed in the installation table 211.

As illustrated in FIG. 7, first, the control function 92 in the control circuitry 9 moves the transporter 212 to the installation position (step S11). Specifically, the control function 92 controls the transporter 212 by controlling the drive mechanism 4 to move the transporter 212 to the installation position, which is the position where the sample rack 21 or the reagent container 23 is installed in the slot 2112 of the installation table 211.

Next, as illustrated in FIG. 7, the control function 92 in the control circuitry 9 measures the distance (step S13). Specifically, the control function 92 controls the measurement sensor 215 at the installation position to measure the distance to the sample rack 21 or the reagent container 23 installed in the slot 2112 of the installation table 211.

Next, as illustrated in FIG. 7, the acquisition function 91 in the control circuitry 9 acquires a measurement result of the measurement sensor 215 as position information (step S15). Specifically, the acquisition function 91 acquires, as the measurement result of the measurement sensor 215, the distance to the sample rack 21 or the reagent container 23 installed in the slot 2112 of the installation table 211 measured by the measurement sensor 215 in step S13.

Next, as illustrated in FIG. 7, the control function 92 in the control circuitry 9 moves the holding arm 2121 (step S17). Specifically, the control function 92 moves the holding arm 2121 in a direction approaching the sample rack 21 or the reagent container 23 in the direction D1 illustrated in FIG. 5 based on the measurement result of the measurement sensor 215 acquired in step S15. More specifically, the control function 92 determines the operation amount of the holding arm 2121 based on the measurement result of the measurement sensor 215, and moves the moving member 2122 by driving the drive mechanism 4 according to the determined operation amount, thereby moving the holding arm 2121 to below the transporter handle 21_2 of the sample rack 21 or the transporter handle 231_2 of the adapter 231 attached to the reagent container 23, installed in the installation table 211.

Next, as illustrated in FIG. 7, the control function 92 in the control circuitry 9 holds the sample rack 21 or the reagent container 23 (step S19). Specifically, the control function 92 holds the sample rack 21 or the reagent container 23 by moving the holding arm 2121 upward in the D2 direction illustrated in FIG. 5. More specifically, the control function 92 holds the sample rack 21 or the reagent container 23 by moving the holding arm 2121, which is installed in the installation table 211 and has moved to below the transporter handle 21_2 of the sample rack 21 or the transporter handle 231_2 of the adapter 231 attached to the reagent container 23, upward to engage the engagement hole H1 of the holding arm 2121 with the transporter handle 21_2 of the sample rack 21 or the transporter handle 231_2 of the adapter 231 attached to the reagent container 23.

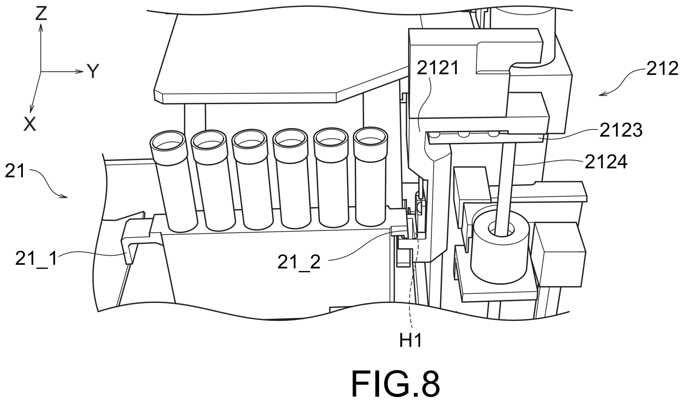

FIG. 8 is a diagram illustrating an example of a state in which the transporter 212 according to the first embodiment holds the sample rack 21. In the example illustrated in FIG. 8, the holding arm 2121 of the transporter 212 engages the transporter handle 21_2 of the sample rack 21 with the engagement hole H1, so that the transporter 212 holds the sample rack 21.

By the holding operation in step S19, the transport control processing according to the present embodiment ends. Thereafter, the control function 92 raises the holding arm 2121 to raise the sample rack 21 or the reagent container 23 engaged with the holding arm 2121. Then, after the sample rack 21 or the reagent container 23 is pulled out from the slot 2112 in the installation table 211, the control function 92 controls the transporter 212 to transport the sample rack 21 to the loading position when the holding arm 2121 holds the sample rack 21 based on the reading result of the reader 214, and controls the transporter 212 to transport the reagent container 23 to the reagent container temporary storage 115 when the holding arm 2121 holds the reagent container 23. As a result, a series of operations for transporting the sample rack 21 or the reagent container 23 ends. Then, the transport control processing of transporting the sample rack 21 or the reagent container 23 installed in the next installation table 211 is executed.

As described above, in the automatic analyzing apparatus 1 according to the present embodiment, the measurement result of the measurement sensor 215 is acquired as the position information, the holding arm 2121 is moved based on the measurement result of the measurement sensor 215, the sample rack 21 or the reagent container 23 is held by the holding arm 2121, and the held sample rack 21 or the reagent container 23 is transported to a predetermined position. Therefore, the transporter 212 can hold the sample rack 21 and the reagent container 23 having different sizes regardless of the installation position. Therefore, the sample rack 21 and the reagent container 23 having different sizes can be transported without impairing usability.

### [First Modification]

In the automatic analyzing apparatus 1 according to the first embodiment described above, the measurement sensor 215 is provided to acquire the measurement result of the measurement sensor 215 as the position information, and the holding arm 2121 in the transporter 212 is moved based on the measurement result of the measurement sensor 215. However, by including a detection sensor instead of the measurement sensor 215, it is also possible to acquire the detection result of the detection sensor as the position information, and move the holding arm 2121 in the transporter 212 based on the detection result of the detection sensor. Hereinafter, the first modification will be described with an example in which the present modification is applied to the first embodiment described above.

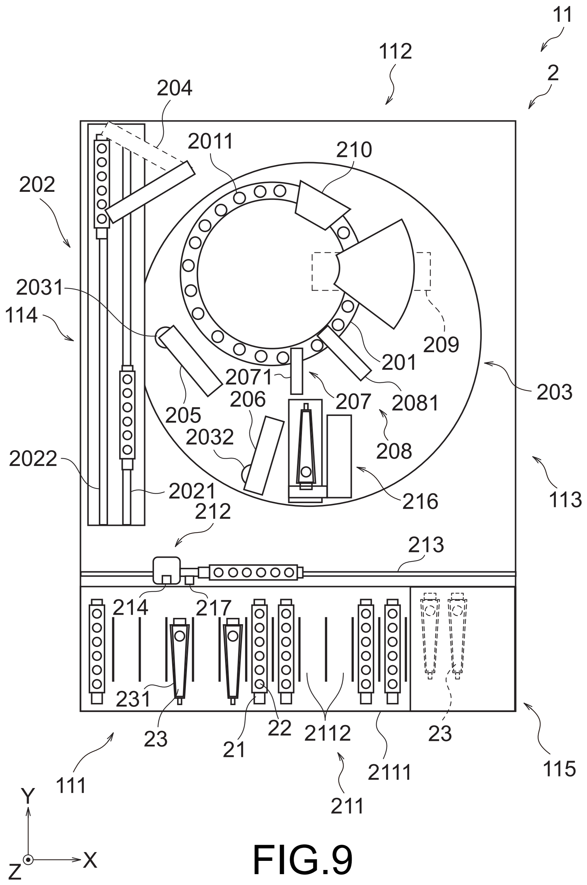

FIG. 9 is a schematic diagram illustrating a configuration of an analysis mechanism 2 according to the first modification, and is a diagram corresponding to FIG. 2. As illustrated in FIG. 9, the analysis mechanism 2 according to the present modification includes a detection sensor 217 instead of the measurement sensor 215. Note that the configuration of the analysis mechanism 2 other than the detection sensor 217 is the same as that of the analysis mechanism 2 according to the first embodiment described above, and thus the description thereof will be omitted.

The detection sensor 217 detects the sample rack 21 or the reagent container 23 installed in the installation table 211. The detection sensor 217 is, for example, a pressure sensor that detects pressure. The detection sensor 217 outputs the detection result to the control circuitry 9. As illustrated in FIG. 2, the detection sensor 217 is provided in the transporter 212. Specifically, for example, the detection sensor 217 is provided at the tip end of the holding arm 2121 so as to be able to contact the sample rack 21 or the reagent container 23.

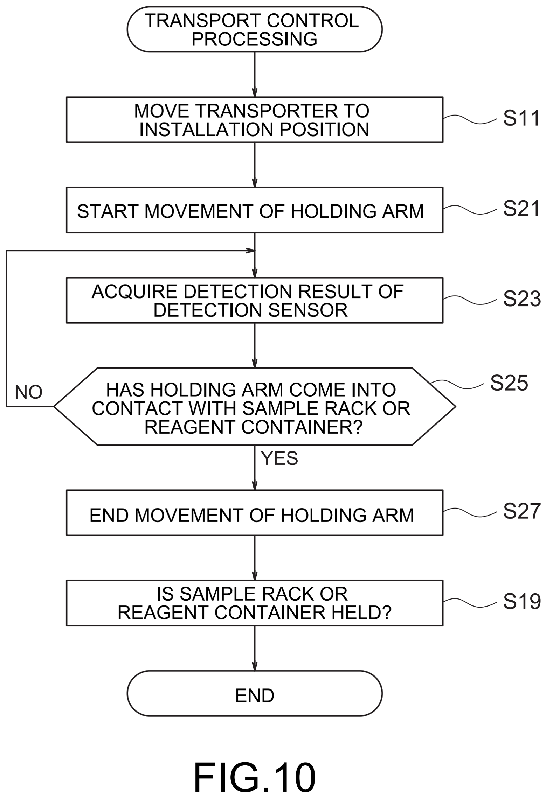

FIG. 10 is a flowchart for explaining the contents of the transport control processing executed by the automatic analyzing apparatus according to the first modification, and is a diagram corresponding to FIG. 7. In this transport control processing, the automatic analyzing apparatus 1 moves the transporter 212 to the installation position, starts the movement of the holding arm 2121, acquires a detection result, determines whether or not the holding arm 2121 has come into contact with the sample rack 21 or the reagent container 23, terminates the movement of the holding arm 2121, and holds the sample rack 21 or the reagent container. This transport control processing is processing executed when the sample rack 21 or the reagent container 23 is installed in the installation table 211. Note that the processing in step S11 is the same as that in FIG. 7 described above, and thus description thereof is omitted.

Next, as illustrated in FIG. 10, the control function 92 in the control circuitry 9 starts the movement of the holding arm 2121 (step S21). Specifically, the control function 92 drives the drive mechanism 4 to move the moving member 2122, thereby starting the movement of the holding arm 2121 so as to approach the sample rack 21 or the reagent container 23. More specifically, the control function 92 starts the movement of the holding arm 2121 at a low speed in order to bring the pressure sensor, which is the detection sensor 217, into contact with the sample rack 21 or the reagent container 23 installed in the installation table 211.

Next, as illustrated in FIG. 10, the acquisition function 91 in the control circuitry 9 acquires the detection result of the detection sensor 217 as the position information (step S23). Specifically, the control function 92 acquires a pressure value output from the pressure sensor as a detection result of the detection sensor 217. Then, the acquisition function 91 stores the pressure value in the memory 8.

Next, as illustrated in FIG. 10, the control function 92 in the control circuitry 9 determines whether the holding arm 2121 has come into contact with the sample rack 21 or the reagent container 23 (step S25). Specifically, the control function 92 determines whether or not the holding arm 2121 has come into contact with the sample rack 21 or the reagent container 23 by determining whether or not the detection result of the detection sensor 217 acquired in step S23 has changed. More specifically, the control function 92 determines whether or not the holding arm 2121 has come into contact with the sample rack 21 or the reagent container 23 by determining whether or not the pressure value of the pressure sensor acquired as the detection result of the detection sensor 217 has changed.

As a result, the control function 92 determines whether or not the holding arm 2121 has moved below the transporter handle 21_2 of the sample rack 21 or the transporter handle 231_2 of the adapter 231 attached to the reagent container 23, which is a position for holding the sample rack 21 or the reagent container 23 installed in the installation table 211. Then, in step S25, when the holding arm 2121 is not in contact with the sample rack 21 or the reagent container 23 (step S25: NO), the control function 92 returns to step S23, and repeats the processing of acquiring the detection result of the detection sensor 217 (step S23) and the processing of determining whether or not the holding arm 2121 is in contact with the sample rack 21 or the reagent container 23 (step S25) and stands by.

On the other hand, when the holding arm 2121 comes into contact with the sample rack 21 or the reagent container 23 in step S25 (step S25: YES), the control function 92 ends the movement of the holding arm 2121 (step S27). Specifically, the control function 92 ends the movement of the holding arm 2121 assuming that the holding arm 2121 has moved below the transporter handle 21_2 of the sample rack 21 or the transporter handle 231_2 of the adapter 231 attached to the reagent container 23, which is a position for holding the sample rack 21 or the reagent container 23 installed in the installation table 211. Note that the processing in step S19 is the same as that in FIG. 7 described above, and thus description thereof is omitted.

By the holding operation in step S19, the transport control processing according to the present modification ends. Since the subsequent operation is the same as that of the first embodiment described above, the description thereof will be omitted.

As described above, in the automatic analyzing apparatus 1 according to the present modification, the detection result of the detection sensor 217 is acquired as the position information, whether or not the holding arm 2121 has moved to the position of holding the sample rack 21 or the reagent container 23 installed in the installation table 211 is determined based on the detection result of the detection sensor 217, and when the holding arm 2121 has moved, the sample rack 21 or the reagent container 23 is held by the holding arm 2121, and the held sample rack 21 or the reagent container 23 is transported to a predetermined position. Therefore, the transporter 212 can hold the sample rack 21 and the reagent container 23 having different sizes regardless of the installation position. Therefore, it is possible to transport the sample rack 21 and the reagent container 23 having different sizes without impairing usability.

In the automatic analyzing apparatus 1 according to the first modification, the control function 92 determines whether or not the holding arm 2121 has come into contact with the sample rack 21 or the reagent container 23 by determining whether or not the pressure value of the pressure sensor acquired as the detection result of the detection sensor 217 has changed in step S25 of the transport control processing, but the method of determining whether or not the holding arm 2121 has come into contact with the sample rack 21 or the reagent container 23 is not limited thereto. That is, a method of determining whether or not the holding arm 2121 has come into contact with the sample rack 21 or the reagent container 23 is optional, and for example, it may be determined whether or not a change in the pressure value of the pressure sensor has reached a predetermined threshold value or more, or it may be determined whether or not the pressure value of the pressure sensor has reached a predetermined threshold value or more.

### [Second Embodiment]

In the automatic analyzing apparatus 1 according to the first embodiment described above, the measurement sensor 215 measures the distance to the sample rack 21 or the reagent container 23, and the holding arm 2121 is moved based on the measurement result of the measurement sensor 215, but the present invention is not limited thereto. In the automatic analyzing apparatus 1 according to the second embodiment, when the positions at which the sample rack 21 and the reagent container 23 are installed in the slot 2112 of the tray 2111 in the installation table 211 are known, either the first position information related to the position of holding the sample rack 21 or the second position information related to the position of holding the reagent container 23 is acquired to control the transporter based on the first position information or the second position information. Hereinafter, portions different from the above-described first embodiment will be described.

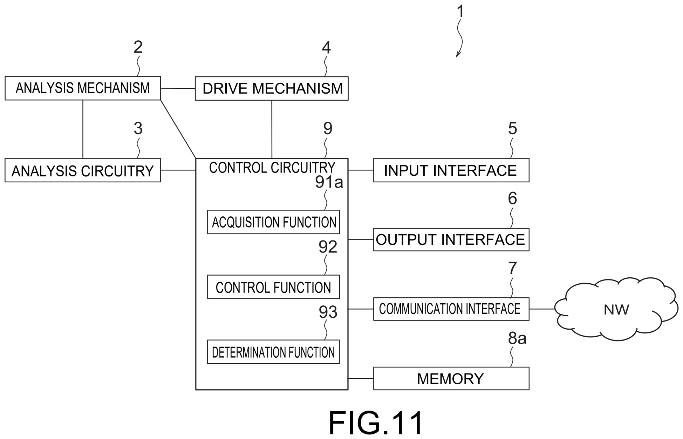

FIG. 11 is a block diagram illustrating an example of a functional configuration of the automatic analyzing apparatus according to the second embodiment, and is a diagram corresponding to FIG. 1. As illustrated in FIG. 11, in the automatic analyzing apparatus 1 according to the present embodiment, the memory and the acquisition function are different from those of the automatic analyzing apparatus 1 according to the first embodiment, and thus are denoted as memory 8a and an acquisition function 91a. In the automatic analyzing apparatus 1 according to the present embodiment, the control circuitry 9 additionally includes a determination function 93. Note that functions and configurations other than the memory 8a, the acquisition function 91a, and the determination function 93 in the automatic analyzing apparatus 1 according to the present embodiment are the same as those in FIG. 1 described above, and thus description thereof is omitted.

The memory 8a according to the present embodiment stores position information. The position information includes first position information on the position where the sample rack 21a is held and second position information on the position where the reagent container 23 is held.

The acquisition function 91a according to the present embodiment acquires the first position information or the second position information based on the determination result of the determination function 93.

The determination function 93 determines which one of the sample rack 21a and the reagent container 23 is installed in the installation table 211a based on the reading result of the reader 214. Similarly to the other functions, the determination function 93 is a function implemented by the control circuitry 9 reading and executing a program stored in the memory 8a. The determination function 93 corresponds to a determination unit in the present embodiment.

FIG. 12 is a schematic diagram illustrating a configuration of an analysis mechanism 2 according to the second embodiment, and is a diagram corresponding to FIG. 2. As illustrated in FIG. 12, in the analysis mechanism 2 according to the present embodiment, the installation table 211 is different from that in the first embodiment, and thus is denoted as the installation table 211a. In addition, since the sample rack 21 installed in the installation table 211a of the analysis mechanism 2 according to the present embodiment is different from that of the first embodiment, it is referred to as a sample rack 21a. The configuration of the analysis mechanism 2 other than the installation table 211a and the sample rack 21a is the same as that in FIG. 2, and thus the description thereof is omitted.

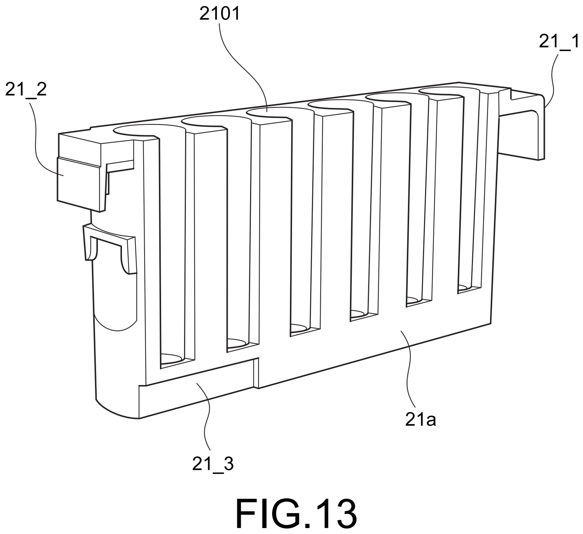

FIG. 13 is a diagram illustrating an example of a configuration of the sample rack 21a installed in the installation table 211a of the automatic analyzing apparatus 1 according to the second embodiment. In the sample rack 21a according to the present embodiment, a cutout 21_3 is formed in the bottom surface of the sample rack 21a. Since the configuration of the sample rack 21a other than the cutout 21_3 is the same as that of the sample rack 21 according to the first embodiment, the description thereof will be omitted.

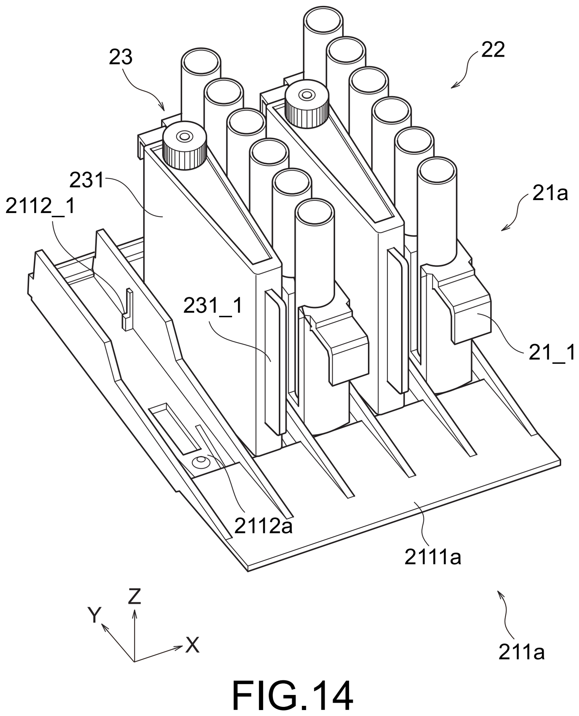

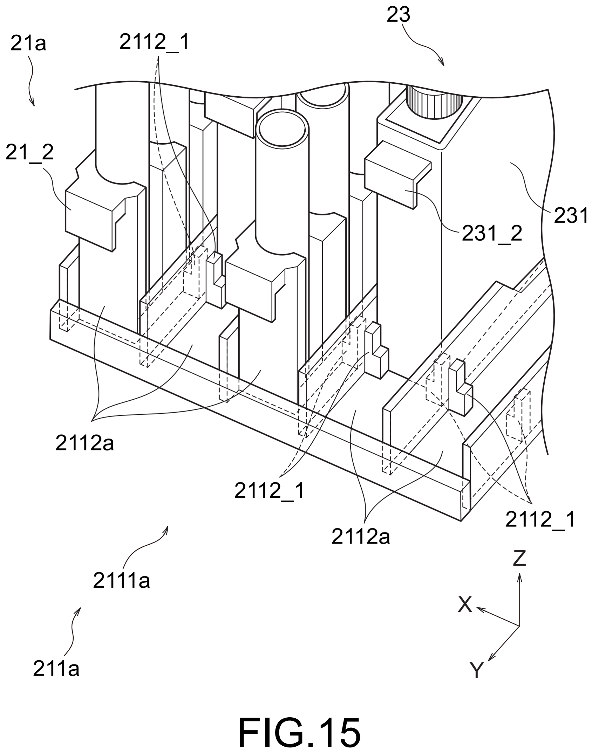

FIG. 14 is a diagram illustrating an example of an installation state of the sample rack 21a and the reagent container 23 when viewed from the user side in the second embodiment, and is a diagram corresponding to FIG. 3. FIG. 15 is a diagram illustrating an example of the installation state of the sample rack 21a and the reagent container 23 when viewed from the transporter 212 side in the installation state illustrated in FIG. 14, and is a diagram corresponding to FIG. 4. As illustrated in FIGS. 14 and 15, a restrictor 2112_1 is provided in each slot 2112a in the tray 2111a of the installation table 211a according to the present embodiment. The restrictor 2112_1 restricts the installation position of the reagent container 23 such that the user handle 231_1 of the reagent container 23 is not pushed into the depth side (the transporter 212 side) of the user handle 21_1 of the sample rack 21a. That is, when the user installs the reagent container 23 in the slot 2112a of the tray 2111a, since the side surface of the reagent container 23 comes into contact with the restrictor 2112_1, the reagent container 23 is not installed on the back side (the transporter 212 side in the installation table 211) beyond the restrictor 2112_2. In other words, the restrictor 2112_1 is configured to restrict the position of the reagent container 23 such that the end portion on the back side of the reagent container 23 is located on the front side of the end portion on the back side of the sample rack 21a with respect to the insertion direction (Y direction) in the installation in the installation table 211a, and in a state where the reagent container 23 and the sample rack 21a are installed in the installation table 211a, the position in the insertion direction of the user handle 231_1 of the reagent container 23 and the position in the insertion direction of the user handle 21_1 of the sample rack 21a substantially coincide with each other. In addition, since the user installs the reagent container 23 in contact with the restrictor 2112_2, the installation position of the reagent container 23 in the slot 2112a is known. On the other hand, as illustrated in FIGS. 14 and 15, when the user installs the sample rack 21a in the slot 2112a of the tray 2111a, since the cutout 21_3 is formed in the bottom surface of the sample rack 21a according to the present embodiment, the sample rack 21a can be installed in accordance with the transporter 212 side (back side) of the installation table 211a without being restricted by the restrictor 2112_2, that is, without coming into contact with the restrictor 2112_2. Therefore, the installation position of the sample rack 21a in the slot 2112a is also known.

That is, as illustrated in FIGS. 14 and 15, since the installation position of the reagent container 23 in the slot 2112a and the installation position of the sample rack 21a in the slot 2112a are known, the position for holding the reagent container 23 and the position for holding the sample rack 21a are known. Therefore, if which one of the sample rack 21a and the reagent container 23 is installed in the installation table 211a is known, the control function 92 can determine the operation amount of the holding arm 2121 based on the first position information or the second position information, so that the transporter 212 can be controlled based on the first position information or the second position information.

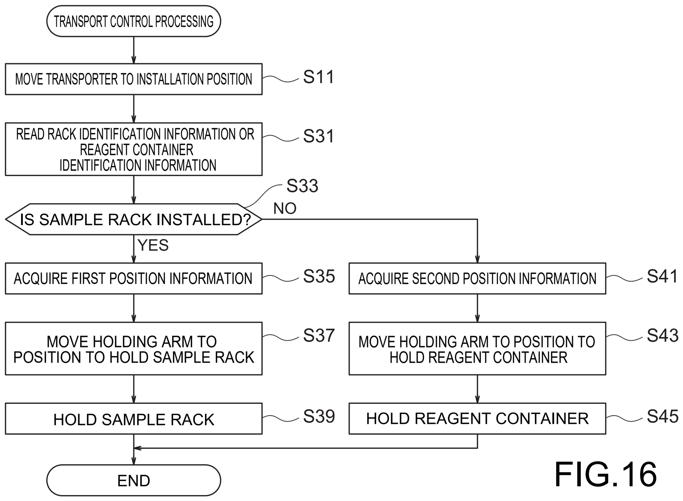

FIG. 16 is a flowchart for explaining the contents of the transport control processing executed by the automatic analyzing apparatus 1 according to the second embodiment, and is a diagram corresponding to FIG. 7. In this transport control processing, the automatic analyzing apparatus 1 moves the transporter 212 to the installation position, reads the rack identification information or the reagent container identification information, determines whether the sample rack 21a is installed, acquires the first position information or the second position information, moves the holding arm 2121 to a position for holding the sample rack 21a or the reagent container 23, or holds the sample rack 21a or the reagent container 23. This transport control processing is processing executed when the sample rack 21a or the reagent container 23 is installed in the installation table 211a. Note that the processing in step S11 is the same as that in FIG. 7 described above, and thus description thereof is omitted.

Next, as illustrated in FIG. 16, the control function 92 in the control circuitry 9 reads the identification information (step S31). Specifically, the control function 92 controls the reader 214 to read the rack identification information of the sample rack 21a or the reagent container identification information of the reagent container 23 installed in the installation table 211a.

Next, as illustrated in FIG. 16, the determination function 93 in the control circuitry 9 determines whether the sample rack 21a is installed (step S33). Specifically, the determination function 93 determines whether the sample rack 21a is installed in the installation table 211a based on the reading result of the reader 214 in step S31. More specifically, when the rack identification information is read as the reading result of the reader 214, it is determined that the sample rack 21a is installed, and when the reagent container identification information is read, it is determined that the sample rack 21a is not installed, that is, the reagent container 23 is installed. That is, in step S33, it is determined which one of the sample rack 21a and the reagent container 23 is installed in the installation table 211a based on the reading result of the reader 214.

Then, in step S33, when the sample rack 21a is installed (step S33: YES), the acquisition function 91a acquires the first position information (step S35). Specifically, the acquisition function 91a acquires the first position information from the memory 8a based on the determination result of the determination function 93 that the sample rack 21a is installed.

Next, as illustrated in FIG. 16, the control function 92 in the control circuitry 9 moves the holding arm 2121 to a position to hold the sample rack 21a (step S37). Specifically, the control function 92 moves the holding arm 2121 below the transporter handle 21_2 of the sample rack 21a, which is the position where the sample rack 21a is held, based on the first position information. More specifically, the control function 92 determines the operation amount of the holding arm 2121 based on the first position information, and moves the moving member 2122 by driving the drive mechanism 4 according to the determined operation amount, thereby moving the holding arm 2121 below the transporter handle 21_2 of the sample rack 21a.

Next, as illustrated in FIG. 16, the control function 92 in the control circuitry 9 holds the sample rack 21a (step S39). Specifically, the control function 92 moves the holding arm 2121 upward in the D2 direction illustrated in FIG. 5. More specifically, the control function 92 holds the sample rack 21a by moving the holding arm 2121 that has moved to below the transporter handle 21_2 of the sample rack 21a installed in the installation table 211a to upward, to engage the engagement hole H1 of the holding arm 2121 with the transporter handle 21_2 of the sample rack 21a.

On the other hand, when the sample rack 21a is not installed in step S33, that is, when the reagent container 23 is installed (step S33: NO), the acquisition function 91a acquires the second position information (step S41). Specifically, the acquisition function 91a acquires the second position information from the memory 8a based on the determination result of the determination function 93 that the reagent container 23 is installed.

Next, as illustrated in FIG. 16, the control function 92 in the control circuitry 9 moves the holding arm 2121 to a position to hold the reagent container 23 (step S43). Specifically, the control function 92 moves the holding arm 2121 below the transporter handle 231_2 of the adapter 231 attached to the reagent container 23, which is a position for holding the reagent container 23, based on the second position information. More specifically, the control function 92 determines the operation amount of the holding arm 2121 based on the second position information, and moves the moving member 2122 by driving the drive mechanism 4 according to the determined operation amount, thereby moving the holding arm 2121 below the transporter handle 231_2 of the adapter 231 attached to the reagent container 23.

Next, as illustrated in FIG. 16, the control function 92 in the control circuitry 9 holds the reagent container 23 (step S45). Specifically, the control function 92 moves the holding arm 2121 upward in the D2 direction illustrated in FIG. 5. More specifically, the control function 92 holds the reagent container 23 by moving the holding arm 2121 that has moved to below the transporter handle 231_2 of the adapter 231 attached to the reagent container 23 installed in the installation table 211a to upward, to engage the engagement hole H1 of the holding arm 2121 with the transporter handle 231_2 of the adapter 231 attached to the reagent container 23.

By the holding operation in step S39 or step S45, the transport control processing according to the present embodiment ends. Thereafter, the control function 92 raises the holding arm 2121 to raise the sample rack 21a or the reagent container 23 engaged with the holding arm 2121. Then, after the sample rack 21a or the reagent container 23 is pulled out from the slot 2112a in the installation table 211a, the control function 92 controls the transporter 212 to transport the sample rack 21a to the loading position of the rack sampler 202 when the sample rack 21a is held by the holding arm 2121, and controls the transporter 212 to transport the reagent container 23 to the reagent container temporary storage 115 when the reagent container 23 is held by the holding arm 2121. As a result, a series of operations for transporting the sample rack 21a or the reagent container 23 ends. Then, the transport control processing of transporting the sample rack 21a or the reagent container 23 installed in the next installation table 211a is executed.

As described above, in the automatic analyzing apparatus 1 according to the present embodiment, the reader 214 reads the rack identification information or the reagent container identification information, determines which one of the sample rack 21a and the reagent container 23 is installed based on the reading result of the reader 214, acquires the first position information or the second position information based on the determination result of the determination function 93, moves the holding arm 2121 based on the first position information or the second position information, causes the holding arm 2121 to hold the sample rack 21a or the reagent container 23, and transports the held sample rack 21a or the reagent container 23 to a predetermined position. In addition, from another aspect, in the automatic analyzing apparatus 1 according to the present embodiment, the reader 214 reads the first additional information attached to the sample rack 21a or the second additional information attached to the reagent container from the sample rack 21a or the reagent container 23 installed in the installation table 211, and the control function 92 causes the holding arm 2121 to hold the sample rack 21a or the reagent container 23 installed in the installation table 211 at a position corresponding to the reading result. As a result, since the automatic analyzing apparatus 1 can hold the sample rack 21a and the reagent container 23 having different sizes, the sample rack 21a and the reagent container 23 having different sizes can be transported without impairing usability.

### [Third Embodiment]

In the automatic analyzing apparatus 1 according to the second embodiment described above, when the installation position of the reagent container 23 in the slot 2112a and the installation position of the sample rack 21 in the slot 2112a are known, the sample rack 21 or the reagent container 23 may be held by the holding arm having an arm length such that one holder of the holding arm is installed at the position where the sample rack 21 is held and having an arm length such that another holder of the holding arm is installed at the position where the reagent container 23 is held. Hereinafter, the third embodiment will be described with an example in which the present modification is applied to the second embodiment.

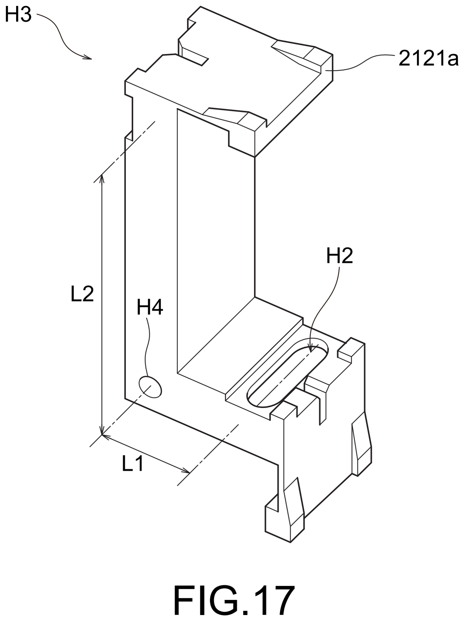

FIG. 17 is a diagram illustrating an example of a configuration of a holding arm in a transporter 212 according to the third embodiment. As illustrated in FIG. 17, a holding arm 2121a according to the present embodiment is a substantially L-shaped arm, and the holding arm 2121a according to the present embodiment is provided with a first engagement hole H2 for holding the sample rack 21 and a second engagement hole H3 for holding the reagent container 23. The holding arm 2121a is provided with an attachment hole H4 for attaching a rotation support shaft to be described later. As illustrated in FIG. 17, the first engagement hole H2 has an oval shape. The first engagement hole H2 is provided on one end side of the L shape at a position of a length L1 from the center of the attachment hole H4. The length L1 corresponds to the length from the center of the attachment hole H4 to the position where the sample rack 21 is held. The second engagement hole H3 also has an oval shape. As illustrated in FIG. 17, the second engagement hole H3 is provided on the other end side of the L shape at a position of a length L2 from the center of the attachment hole H4. The length L2 corresponds to the length from the attachment hole H4 to the position where the reagent container 23 is held. The first engagement hole H2 is an example of a first holder in the present embodiment, and the second engagement hole H3 is an example of a second holder in the present embodiment. Although the first engagement hole H2 and the second engagement hole H3 have an oval shape, the shapes of the first engagement hole H2 and the second engagement hole H3 are not limited thereto. That is, the shapes of the first engagement hole H2 and the second engagement hole H3 are optional, and may be, for example, an elliptical shape or a rectangular shape.

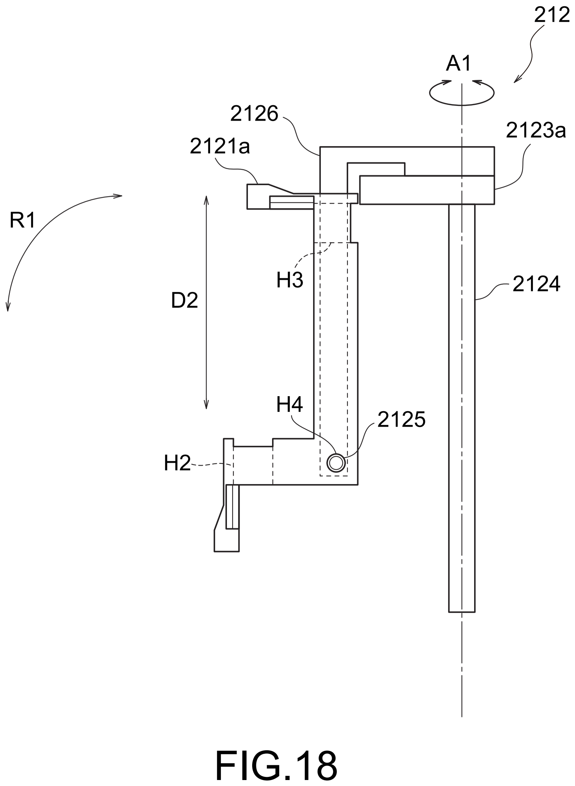

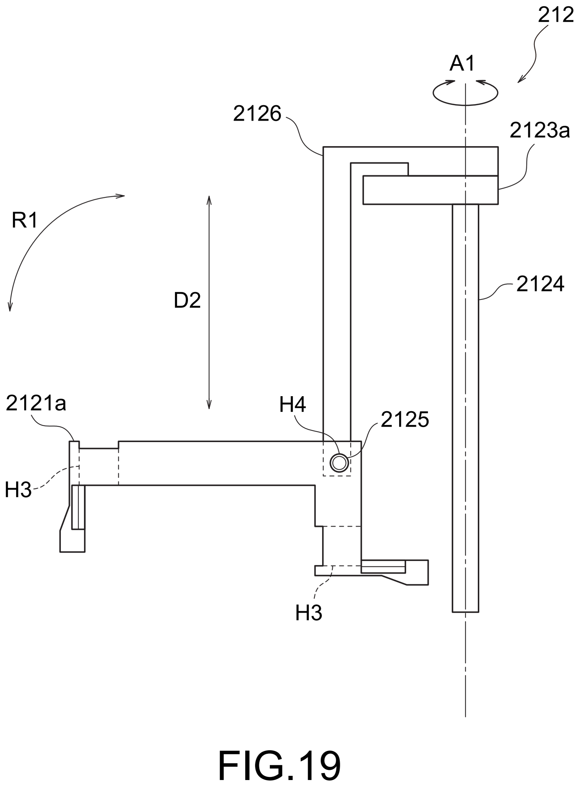

FIGS. 18 and 19 are views illustrating an example of a configuration of a transporter 212 according to the third embodiment, and are views corresponding to FIG. 5. As illustrated in FIGS. 18 and 19, the transporter 212 according to the present embodiment includes the holding arm 2121a, a base 2123a, the shaft 2124, a rotation support shaft 2125, and a support member 2126. Since the configuration of the shaft 2124 is the same as that in FIG. 5, the description thereof will be omitted.

The holding arm 2121a according to the present embodiment rotates in an R1 direction about the rotation support shaft 2125 as the rotation support shaft 2125 rotates by the drive mechanism 4. Then, the holding arm 2121a rotates in the R1 direction to switch the first engagement hole H2 between the use position and the storage position. Similarly, the holding arm 2121a rotates in the R1 direction to switch the second engagement hole H3 between the use position and the storage position. The example illustrated in FIG. 18 illustrates a state in which the first engagement hole H2 is at the use position and the second engagement hole H3 is at the storage position. Therefore, in the example illustrated in FIG. 18, a first use state in which the first engagement hole H2 can be used, that is, the state in which the sample rack 21 can be held is established. The example illustrated in FIG. 19 illustrates a state in which the second engagement hole H3 is at the use position and the first engagement hole H2 is at the storage position. Therefore, in the example illustrated in FIG. 18, a second use state in which the second engagement hole H3 can be used, that is, the state in which the reagent container 23 can be held is established.

The support member 2126 is attached to the base 2123a according to the present embodiment, and the base is attached to the shaft 2124. The rotation support shaft 2125 rotatably supports the holding arm 2121a. One end of the rotation support shaft 2125 is attached to the attachment hole H4, and the drive mechanism 4 is attached to the other end. The support member 2126 supports the holding arm 2121a by supporting the drive mechanism 4 attached to the other end of the rotation support shaft 2125.

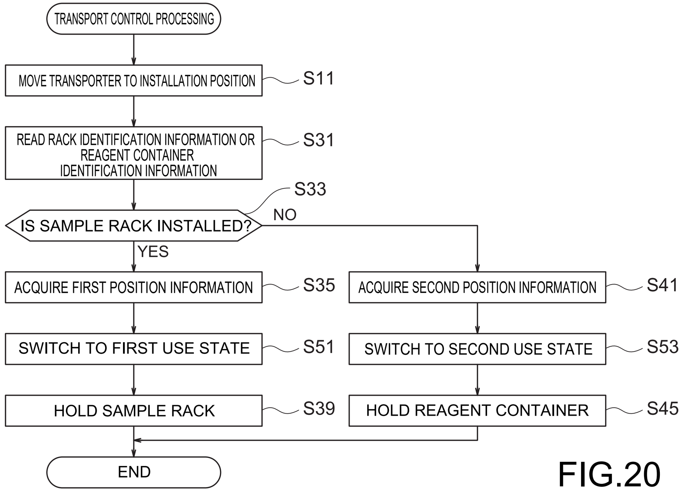

FIG. 20 is a flowchart for explaining the contents of the transport control processing executed by the automatic analyzing apparatus 1 according to the third embodiment, and is a diagram corresponding to FIG. 16. In this transport control processing, the automatic analyzing apparatus 1 moves the transporter 212 to the installation position, reads the rack identification information or the reagent container identification information, determines whether the sample rack 21 is installed, acquires the first position information or the second position information, switches between the first use state and the second use state based on the first position information or the second position information, or holds the sample rack 21 or the reagent container 23. This transport control processing is processing executed when the sample rack 21 or the reagent container 23 is installed in the installation table 211. Note that the processing in step S11 is the same as that in FIG. 7 described above, and thus description thereof is omitted. In addition, since the processing in steps S31 to S35 is the same as that in FIG. 16, the description thereof will be omitted.

Next, as illustrated in FIG. 20, the control function 92 in the control circuitry 9 switches to the first use state (step S51). Specifically, the control function 92 switches the holding arm 2121a to the first use state based on the first position information. More specifically, the control function 92 switches the holding arm 2121a to the first use state by driving the drive mechanism 4 to rotate the rotation support shaft 2125 based on the first position information acquired in step S35. As a result, the control function 92 can position the first engagement hole H2 of the holding arm 2121a below the transporter handle 21_2 of the sample rack 21, which is the position where the sample rack 21 is held. Note that the processing in step S39 and step S41 after step S51 is the same as that in FIG. 16, and thus the description thereof will be omitted.

Next, as illustrated in FIG. 20, the control function 92 in the control circuitry 9 switches to the second use state (step S53). Specifically, the control function 92 switches the holding arm 2121a to the second use state based on the second position information. More specifically, the control function 92 switches the holding arm 2121a to the second use state by driving the drive mechanism 4 to rotate the rotation support shaft 2125 based on the second position information acquired in step S41. As a result, the control function 92 can position the second engagement hole H3 of the holding arm 2121a below the transporter handle 231_2 of the adapter 231 attached to the reagent container 23, which is a position for holding the reagent container 23. Note that the processing in step S45 after step S53 is the same as that in FIG. 16, and thus the description thereof will be omitted.

By the holding operation in step S39 or step S45, the transport control processing according to the present embodiment ends. Since the processing after the transport control processing is ended is the same as that of the second embodiment described above, the description thereof will be omitted.

As described above, in the automatic analyzing apparatus 1 according to the present embodiment, the reader 214 reads the rack identification information or the reagent container identification information, determines whether the sample rack 21 is installed based on the reading result of the reader 214, acquires the first position information or the second position information based on the determination result of the determination function 93, switches to the first use state or the second use state based on the first position information or the second position information, causes the holding arm 2121a to hold the sample rack 21 or the reagent container 23, and transports the held sample rack 21 or the reagent container 23 to a predetermined position. In addition, from another aspect, in the automatic analyzing apparatus 1 according to the present embodiment, the reader 214 reads the first additional information attached to the sample rack 21a or the second additional information attached to the reagent container from the sample rack 21a or the reagent container 23 installed in the installation table 211, and the control function 92 switches to the first use state or the second use state based on the first additional information or the second additional information that is the reading result cause the holding arm 2121a to hold the sample rack 21 or the reagent container 23. As a result, the automatic analyzing apparatus 1 can hold the sample rack 21 and the reagent container 23 having different sizes. Therefore, the sample rack 21 and the reagent container 23 having different sizes can be transported without impairing usability.

In the third embodiment described above, the first engagement hole H2 and the second engagement hole H3 are provided in one holding arm 2121a, but the present invention is not limited thereto. The transporter 212 may include two holding arms, and one of the two holding arms may be provided with the first engagement hole H2 and the other holding arm may be provided with the second engagement hole H3.

### [Fourth Embodiment]

In the first to third embodiments described above, after the holding arm 2121 holds the sample rack 21 or the reagent container 23, in the following description, when the transporter 212 transports the sample rack 21 or the reagent container 23 held by the holding arm 2121 to a predetermined position, the control function 92 can also control a transport operation of the transporter 212 using different parameters between the case where the transporter 212 transports the sample rack 21 and the case where the transporter 212 transports the reagent container 23. Hereinafter, the fourth embodiment will be described with an example in which the present modification is applied to the first embodiment as an example. The present modification is applicable to any of the above-described embodiments.

In the present embodiment, after the transporter 212 holds the sample rack 21 or the reagent container 23, the control function 92 controls the transport operation of the transporter 212 using different parameters between a case where the transporter 212 holds and transports the sample rack 21 and a case where the transporter 212 holds and transports the reagent container 23. Specifically, the control function 92 controls the transport operation of the transporter 212 using a parameter such that the transport speed when the transporter 212 holds and transports the reagent container 23 is lower than the transport speed of the transporter 212 when the transporter 212 holds and transports the sample rack 21.

As described above, in the automatic analyzing apparatus 1 according to the fourth embodiment, the transport operation of the transporter 212 is controlled using a parameter such that the transport speed when the transporter 212 holds and transports the reagent container 23 is lower than the transport speed of the transporter 212 when the transporter 212 holds and transports the sample rack 21, and thus, it is possible to reduce the risk of foaming of the reagent contained in the reagent container 23.

### [Other Modifications]

In the first to third embodiments described above, the transporter 212 includes one holding arm, but the number of holding arms included in the transporter 212 is not limited to one. That is, the number of holding arms included in the transporter 212 is optional, and two or more holding arms may be included. For example, when three or more holding arms are provided, the shape of the holder provided in each holding arm may be changed.

In the automatic analyzing apparatus 1 according to the first to fourth embodiments, and the first modification, the reader 214 has been described as reading the rack identification information and the reagent container identification information, but the present invention is not limited thereto. For example, the sample rack 21 may be provided with information indicating only that it is a sample rack instead of the rack identification information or in addition to the rack identification information, and the reagent container 23 may be provided with information indicating only that it is a reagent container instead of the reagent container identification information or in addition to the reagent container identification information, and the reader 215 may be configured to read the "information indicating only that it is a sample rack" or the "information indicating only that it is a reagent container". That is, the first additional information may be information indicating the sample rack 21, and the second additional information may be information indicating only the reagent container 23.

In addition, in the automatic analyzing apparatus 1 according to the first to third embodiments described above, application to an automatic analyzing apparatus that performs biochemical inspection has been described, but the present invention is not limited thereto. That is, the first to third embodiments can be applied to any of an automatic analyzing apparatus that performs a blood coagulation analysis test, an automatic analyzing apparatus that performs an immunological test, and an automatic analyzing apparatus that performs any two or more of a biochemical test, a blood coagulation analysis test, and an immunological test.

Note that the word "processor" used in above descriptions means circuits such as, for example, a Central Processing Unit (CPU), a Graphics Processing Unit (GPU), an Application Specific Integrated Circuit (ASIC), a programmable logic device (for example, a Simple Programmable Logic Apparatus (SPLD), a Complex Programmable Logic Apparatus (CPLD), and a Field Programmable Gate Array (FPGA)). The processor executes functions by reading and executing programs stored in the memory 8. Note that programs may be configured to be directly integrated in the processor instead of being storing in the memory 8. In this case, the processor realizes functions by reading and executing programs stored in the circuitry. Note that the processor is not limited to the case arranged as a single processor circuit, but may be configured as a single processor by combining a plurality of independent circuits to realize functions. Furthermore, a plurality of component elements in Fig.1 may be integrated into one processor to realize the functions.

According to at least one embodiment described above, it is possible to transport specimen racks and reagent containers having different sizes without impairing usability.

While certain embodiments have been described, these embodiments have been presented by way of example only and are not intended to limit the scope of the inventions. The embodiments may be in a variety of other forms. Furthermore, various omissions, substitutions and changes may be made without departing from the scope of the inventions. The embodiments and their modifications are included in the scope and the subject matter of the invention, and at the same time included in the scope of the claimed inventions.

## Claims

1. An automatic analyzing apparatus comprising:
an installation table configured to install a specimen rack and a reagent container, the specimen rack holding a specimen container for containing a specimen and the reagent container containing a reagent used for measurement;
a transporter configured to hold and transport the specimen rack or the reagent container installed in the installation table; and
processing circuitry configured to
acquire position information related to a position for holding the specimen rack or the reagent container installed in the installation table; and
control, based on the position information, the transporter to hold the specimen rack or the reagent container installed in the installation table.

2. The automatic analyzing apparatus of claim 1, further comprising a measurement sensor configured to measure a distance to the specimen rack or the reagent container installed in the installation table,
wherein the processing circuitry is further configured to acquire a measurement result of the measurement sensor as the position information.

3. The automatic analyzing apparatus of claim 1, further comprising a detection sensor configured to detect the specimen rack or the reagent container installed in the installation table,
wherein the processing circuitry is further configured to acquire a detection result of the detection sensor as the position information.

4. The automatic analyzing apparatus of claim 1, further comprising a reader configured to read first additional information attached to the specimen rack and second additional information attached to the reagent container, and read first additional information of the specimen rack or second additional information of the reagent container installed in the installation table.

5. The automatic analyzing apparatus of claim 4, wherein the first additional information is rack identification information for identifying the specimen rack, and the second additional information is reagent container identification information for identifying the reagent container.

6. The automatic analyzing apparatus of claim 4,
wherein the processing circuitry is further configured to determine, based on a reading result of the reader, which one of the specimen rack and the reagent container is installed in the installation table,
wherein the position information includes first position information and second position information, the first position information being related to a position where the specimen rack is held and the second position information being related to a position where the reagent container is held, and
wherein the processing circuitry is further configured to
acquire the first position information or the second position information based on a determination result of the reader; and
control the transporter based on the first position information or the second position information.

7. The automatic analyzing apparatus of one of claims 4 to 6, wherein the reader is provided in the transporter.

8. The automatic analyzing apparatus of claim 4, wherein the reader includes
a reader body configured to read the first additional information and the second additional information, and
a reflector configured to configure an optical path between first additional information of the specimen rack or second additional information of the reagent container installed in the installation table and the reader body.

9. The automatic analyzing apparatus of claim 6,
wherein the transporter includes a holding arm provided with a first holder for holding the specimen rack and a second holder for holding the reagent container, and
wherein the processing circuitry is further configured to switch, based on the first position information or the second position information, to a first use state in which the first holder is usable or a second use state in which the second holder is usable.

10. The automatic analyzing apparatus of claim 4,
wherein the transporter includes a holding arm provided with a first holder for holding the specimen rack and a second holder for holding the reagent container, and
wherein the processing circuitry is further configured to switch to a first use state in which the first holder is usable or a second use state in which the second holder is usable based on the first additional information or the second additional information.

11. The automatic analyzing apparatus of claim 1,
wherein the processing circuitry is further configured to control a transport operation of the transporter using different parameters between a case where the transporter holds and transports the specimen rack and a case where the transporter holds and transports the reagent container.

12. The automatic analyzing apparatus of claim 11,
wherein the processing circuitry is further configured to control the transport operation of the transporter by using a parameter such that a transport speed of the transporter in a case where the transporter holds and transports the reagent container is lower than a transport speed of the transporter in a case where the transporter holds and transports the specimen rack.

13. The automatic analyzing apparatus of claim 6,
wherein the installation table includes a restrictor that restricts a position of the reagent container such that an end portion on a back side of the reagent container is positioned on a front side of an end portion on a back side of the specimen rack with respect to an insertion direction in installation, and
wherein in a state where the reagent container and the specimen rack are installed in the installation table, a position in the insertion direction of a handle for the user to hold the reagent container and a position in the insertion direction of a handle for the user to hold the specimen rack substantially coincide with each other.

14. A method of controlling an automatic analyzing apparatus,
the automatic analyzing apparatus including;
an installation table configured to install a specimen rack and a reagent container, the specimen rack holding a specimen container for containing a specimen and the reagent container containing a reagent used for measurement; and
a transporter configured to hold and transport the specimen rack or the reagent container installed in the installation table,
the method comprising:
acquiring position information related to a position for holding the specimen rack or the reagent container installed in the installation table; and
controlling, based on the position information, the transporter to hold the specimen rack or the reagent container installed in the installation table.

15. The method of controlling an automatic analyzing apparatus of claim 14,
the automatic analyzing apparatus further including a reader configured to read rack identification information for identifying the specimen rack and reagent container identification information for identifying the reagent container, the rack identification information being attached to the specimen rack and the reagent container identification information being attached to the reagent container,
the method further comprising reading the rack identification information of the specimen rack or the reagent container identification information of the reagent container, installed in the installation table.
